# EUROPÄISCHE PATENTSCHRIFT

(11) **EP 3 502 190 B1**
(45) Veröffentlichungstag und Bekanntmachung des Hinweises auf die Patenterteilung: **17.02.2021**
(21) Anmeldenummer: 17210043.0
(22) Anmeldetag: 22.12.2017
(51) Int. Cl.: C08L 77/06, B32B 27/08, C09D 177/06

(54) **ABRIEBFESTE POLYAMID-FORMMASSE**
ABRASION-RESISTANT POLYAMIDE MOULDING MATERIAL
MASSE DE FORMAGE EN POLYAMIDE ABRASIVE

(43) Veröffentlichungstag der Anmeldung: 26.06.2019
(73) Patentinhaber: EMS-CHEMIE AG, 7013 Domat/Ems (CH)
(72) Erfinder: Stöppelmann, Georg, 7402 Bonaduz (CH)
(74) Vertreter: Pfenning, Meinig & Partner mbB

(56) Entgegenhaltungen:
- US-A1- 2005 263 202
- US-A1- 2014 066 568
- US-A1- 2014 179 842

## Beschreibung

Die vorliegende Erfindung betrifft eine Polyamid-Formmasse (I) gemäß Anspruch 1 auf Basis teilkristalliner, aliphatischer Polyamide mit sehr guter Abriebfestigkeit und guten mechanischen Eigenschaften.

Ebenfalls betrifft die vorliegende Erfindung einen ein- oder mehrschichtigen Gegenstand, insbesondere einen mindestens zweischichtigen Gegenstand, wobei mindestens eine der Schichten die Polyamid-Formmasse (I) gemäß Anspruch 1 auf Basis teilkristalliner, aliphatischer Polyamide mit verbesserter Abriebfestigkeit enthält und bevorzugt aus dieser besteht. Ein bevorzugter Gegenstand gemäß vorliegender Erfindung ist eine Lagerschale oder ein Zahnrad.

Es ist bekannt, Zahnräder aus Kunststoff in verschiedenen Anwendungsbereichen der Getriebetechnik in Antriebs- und Kraftsträngen einzusetzen. Dabei ist es insbesondere wichtig, dass der Kunststoff eine hohe Abriebfestigkeit aufweist. Die zum Einsatz kommenden Kunststoffzahnräder weisen im Allgemeinen eine geringere Fähigkeit auf Leistungen zu übertragen als Zahnräder aus Metall. Dabei werden Kunststoffzahnräder entweder durch Gießverfahren hergestellt, oder die Zahnkonturen der Zahnräder werden aus Halbzeugen herausgearbeitet, z.B. durch Fräsen. Die Formen, die bei Gießverfahren zum Einsatz kommen, weisen dabei im Allgemeinen die schlussendliche Zahnkontur auf, so dass die Zähne nicht weiter bearbeitet werden.

DE4414044A1 betrifft Polyamid-Polyphenylenoxid-Mischung mit verbesserter Abriebfestigkeit. Durch Austausch von PA66 oder PA6T/6 durch Polyamid 6T/6I/PACMI/PACMT in diesen PA/PPE-Mischungen wird die Abriebfestigkeit im Mittel um 75% erhöht.

DE 19859686 A1 beschreibt die Verbesserung der Abriebfestigkeit von Polyamid PA6 durch Zusatz von nanoskaligem Zirkondioxid. Auch die Verwendung von ausreichenden Mengen an Molybdändisulfid und Lithiumbromid (EP 0 063 380 A2, US 3,630,098 A) oder von Blei (DE 2913745 A1) sowie PTFE (DE 102004062725 A1) sollen die Abriebfestigkeit von Polyamiden verbessern.

DE 3804161 A1 beschreibt abriebfeste Polymerformmassen enthaltend eine Mischung von nicht miteinander homogen mischbaren säuremodifizierten wie nicht säuremodifizierten Kautschuken. Insbesondere die Verwendung von Polyethylenbutylacrylat in Kombination mit säuremodifiziertem EP-Kautschuk in PA66 führt zu abriebfesten Zusammensetzungen.

Aus der US 2005/0263202 A1 ist eine polymere Komponente für Kraftstoffe bekannt, die aus einer Polyamidzusammensetzung, umfassend einen oder mehrere Polyamide PA 610 und PA 612 zw. Copolyamide hiervon, rostfreie Stahlfasern und/oder Carbon-Nanotubes, einen Schlagzähmodifikator, einen Weichmacher sowie gegebenenfalls weitere Additive bekannt.

Die US 2014/0179842 A1 betrifft eine flammgeschützte Polyamid-Formmasse zur Verwendung auf dem Gebiet der optischen Lichtwellenleiter.

Die US 2014/0066568 A1 betrifft eine Polyamidharz/Blend, umfassend 80 - 20 Gew.-% eines ersten Homopolyamids und 20 - 80 Gew.-% eines zweiten Homopolyamids, das sich vom ersten Homopolyamid unterscheidet, wobei das erste und zweite Homopolyamid ausgewählt sind aus der Gruppe bestehend aus PA 612, PA 614, PA 616 und PA 618.

Die vorliegende Erfindung verfolgt die Aufgabenstellung eine mit einem Füllstoff, verstärkte Polyamid-Formmasse auf Basis von teilkristallinen, aliphatischen Polyamiden bereitzustellen, die eine verbesserte Abriebfestigkeit und gute mechanische Eigenschaften, insbesondere Bruchfestigkeit, Bruchdehnung, Schlagzähigkeit und Kerbschlagzähigkeit, aufweist.

Diese Aufgabe wird durch die Polyamid-Formmassen gemäß Anspruch 1 gelöst.

Bevorzugte Ausführungsformen der erfindungsgemäßen Polyamid-Formmasse werden in den Ansprüchen 2 bis 13 angegeben.

Ebenso war es Aufgabe der vorliegenden Erfindung einen Gegenstand bereitzustellen, der eine verbesserte Abriebfestigkeit aufweist.

Diese Aufgabe wird durch den Gegenstand gemäß Anspruch 14 gelöst, der ein- oder mehrschichtig ist und mindestens eine Schicht aufweist, welche die Polyamid-Formmasse (I) enthält und bevorzugt aus dieser besteht.

Bevorzugte Ausführungsformen des erfindungsgemäßen Gegenstands werden in den Ansprüchen 15 bis 18 angegeben.

Weiterhin betrifft die vorliegende Erfindung gemäß Anspruch 19 die Verwendung der erfindungsgemäßen Polyamid-Formmasse (I) zur Herstellung eines Zahnrads.

### Begriffsdefinitionen

### Schreibweisen und Abkürzungen für Polyamide und deren Monomere

Im Sinne der vorliegenden Erfindung wird unter dem Begriff "Polyamid" (Abkürzung PA) ein Oberbegriff verstanden, dieser umfasst Homopolyamide und Copolyamide. Die gewählten Schreibweisen und Abkürzungen für Polyamide und deren Monomere entsprechen den in der ISO-Norm 16396-1 (2015, (D)) festgelegten. Die darin verwendeten Abkürzungen werden im folgenden Synonym zu den IUPAC Namen der Monomere verwendet.

### Mengenangaben

Die Polyamid-Formmassen gemäß der vorliegenden Erfindung enthalten die Komponenten (A) bis (C) bzw. die Komponenten (D) bis (F), es gilt dabei die Maßgabe, dass sich die Komponenten (A) bis (C) bzw. (D) bis (F) in Summe auf 100 Gew.-% ergänzen. Die festgelegten Bereiche der Mengenangaben für die einzelnen Komponenten (A) bis (C) bzw. (D) bis (F) sind so zu verstehen, dass innerhalb der vorgegebenen Bereiche eine willkürliche Menge für jede der Einzelkomponenten ausgewählt werden kann, sofern die strikte Maßgabe erfüllt wird, dass die Summe aller Komponenten (A) bis (C) bzw. (D) bis (F) jeweils 100 Gew.-% ergibt.

### Teilkristalline Polyamide

Im Sinne der vorliegenden Erfindung sind teilkristalline Polyamide solche Polyamide, die in der dynamischen Differenz-Kalorimetrie (engl. Differential Scanning Calorimetry, DSC) nach ISO 11357-3 (2013) bei einer Aufheizrate von 20 K/min bevorzugt eine Schmelzwärme von mehr als 4 J/g, besonders bevorzugt von wenigstens 20 J/g, ganz besonders bevorzugt von wenigstens 30 J/g aufweisen.

### C- zu N-Verhältnis

Das C- zu N-Verhältnis gemäß der vorliegenden Erfindung gibt das Verhältnis von Kohlenstoffatomen zu Stickstoffatomen im Polyamid an. Dabei werden auch die Kohlenstoffatome und Stickstoffatome, welche an der Bildung der Polyamid-Gruppe beteiligt sind berücksichtigt. Konkret ergibt sich das C/N-Verhältnis der jeweiligen Polyamid-Einheiten aus der Summe der Kohlenstoffatome (C) der Monomere, welche die Polyamid-Einheiten aufbauen, also den Dicarbonsäuren, Diaminen sowie Lactamen und Aminocarbonsäuren, in Bezug auf die Summe der Stickstoffatome (N) in diesen Monomeren, die im Polyamid zu Amidbindungen reagieren können. Enthält ein Polyamid mehrere Polyamideinheiten, wie beispielsweise PA 11/913 (30:70 mol-%), das die PA-Einheiten "11" und "913" umfasst, so werden die C/N-Verhältnisse der einzelnen PA-Einheiten gemäß ihrem Molanteil im Polyamid gewichtet. Für das Beispiel PA 11/913 (30:70 mol-%) resultiert somit ein C/N-Verhältnis von (0.3 ^{∗} 11) + 0.7 ^{∗} (9 + 13) / 2 = 11.

### Polyamid-Formmasse (I)

### Komponente (A)

Komponente (A) der erfindungsgemäßen Polyamid-Formmasse (I) ist eine Mischung aus den Komponenten (A1) und (A2). Komponente (A) ist in der Polyamid-Formmasse (I) in 50 bis 90 Gew.-%, bevorzugt 57 bis 85 oder 57 bis 84.9 Gew.-% und besonders bevorzugt von 63.0 bis 79.8 Gew.-%, jeweils bezogen auf das Gesamtgewicht der Komponenten (A) bis (C) enthalten. Dabei wird Komponente (A) aus 35 bis 95 Gew.-% Komponente (A1) und 5 bis 65 Gew.-% Komponente (A2) gebildet.

Gemäß einer bevorzugten Ausführungsform der vorliegenden Erfindung wird Komponente (A) aus 50 bis 95 Gew.-% und bevorzugt 60 bis 90 Gew.-% Komponente (A1) und 5 bis 50 Gew.-% und bevorzugt 10 bis 40 Gew.-% Komponente (A2) gebildet, wobei die Summe aus (A1) und (A2) 100 Gew.-% (A) ergibt.

Im Folgenden werden die Komponenten (A1) und (A2) näher definiert.

### Komponente (A1)

Komponente (A1) ist mindestens ein teilkristallines, aliphatisches Polyamid mit einem C zu N-Verhältnis von 9 bis 11.5.

Gemäß einer bevorzugten Ausführungsform ist das C zu N-Verhältnis in Komponente (A1) im Bereich von 9 bis 11, bevorzugt im Bereich von 9.5 bis 11, besonders bevorzugt im Bereich von 10 bis 11 und am bevorzugtesten 11.

Nach einer weiteren bevorzugten Ausführungsform ist die relative Viskosität von Komponente (A1) im Bereich von 1,7 bis 3,0, bevorzugt von 1,8 bis 2,7 und bevorzugt von 2,0 bis 2,4. Die relative Viskosität wird dabei bei 20°C gemessen nach ISO 307 (2007) in einer Lösung von 0,5 g Polymer in 100 ml m-Kresol.

Eine weitere bevorzugte Ausführungsform ist dadurch gekennzeichnet, dass Komponente (A1) entweder ein ausgeglichenes Endgruppenverhältnis aufweist, d.h. die Differenz zwischen Amino- und Carboxyl-Endgruppen beträgt höchstens 15 mmol/kg, insbesondere höchstens 10 mmol/kg oder, dass die Amino- bzw. die Carboxyl-Endgruppen im Überschuss vorliegen, wobei die Konzentration der Aminoendgruppen vorzugsweise im Bereich von 20 bis 120 mmol/kg, besonders bevorzugt im Bereich von 30 bis 100 mmol/kg und insbesondere im Bereich von 30 bis 70 mmol/kg liegt und/oder wobei die Konzentration der Carboxyl-Endgruppen vorzugsweise im Bereich von 0 bis 120 mmol/kg, bevorzugt im Bereich von 5 bis 80 mmol/kg und ganz besonders bevorzugt im Bereich von 10 bis 70 mmol/kg liegt. Die Differenz zwischen Amino- und Carboxyl-Endgruppen beträgt dabei wenigstens 20 mmol/kg, bevorzugt wenigstens 25 mmol/kg und insbesondere wenigstens 30 mmol/kg. Insbesondere bevorzugt liegen die Amino-Endgruppen im Überschuss vor.

Nach einer bevorzugten Ausführungsform basiert Komponente (A1) auf linearen, unverzweigten aliphatischen Diaminen und linearen, unverzweigten, aliphatischen Dicarbonsäuren bzw. Aminocarbonsäuren oder Lactamen.

Als Dicarbonsäuren sind Alkandicarbonsäuren mit 6 bis 18, insbesondere 9 bis 16 Kohlenstoffatomen einsetzbar. Als Diamine eignen sich bevorzugt Alkandiamine mit 4 bis 18, insbesondere 5 bis 12 Kohlenstoffatomen. Geeignete Lactame oder Aminocarbonsäuren haben bevorzugt 6 bis 12 Kohlenstoffatome.

Gemäß einer anderen bevorzugten Ausführungsform ist das Diamin ausgewählt aus der Gruppe bestehend aus 1,4-Butandiamin, 1,5-Pentandiamin, 2-Methyl-1,5-pentandiamin, Hexandiamin, insbesondere 1,6-Hexandiamin, 2,2,4-Trimethyl-1,6-hexamethylendiamin, 2,4,4-Trimethyl-1,6-hexamethylendiamin, Nonandiamin, insbesondere 1,9-Nonandiamin, 2-Methyl-1,8-octandiamin, 1,10-Decandiamin, 1,11-Undecandiamin, 1,12-Dodecandiamin, 1,13-Tridecandiamin, 1,14-Tetradecandiamin, 1,16-Hexadecandiamin, 1,18-Octadecandiamin und Mischungen daraus. Besonders bevorzugt sind die offenkettigen, aliphatischen Diamine ausgewählt aus der Gruppe bestehend aus Diaminen mit 6 bis 10 Kohlenstoffatomen, insbesondere 1,6-Hexandiamin, 1,9-Nonandiamin, 1,10-Decandiamin und Mischungen hiervon.

Eine weitere bevorzugte Ausführungsform der vorliegenden Erfindung sieht vor, dass die aliphatische Dicarbonsäure ausgewählt ist aus der Gruppe bestehend aus 1,6-Hexandisäure, 1,9-Nonandisäure, 1,10-Decandisäure, 1,11-Undecandisäure, 1,12-Dodecandisäure, 1,13-Tridecandisäure, 1,14-Tetradecandisäure, 1,16-Hexadecandisäure, 1,18-Octadecandisäure und Mischungen daraus. Besonders bevorzugt sind die offenkettigen, aliphatischen Dicarbonsäuren ausgewählt aus der Gruppe bestehend aus Dicarbonsäuren mit 10 bis 16 Kohlenstoffatomen, insbesondere 1,9-Nonandisäure, 1,10-Decandisäure, 1,11-Undecandisäure, 1,12-Dodecandisäure, 1,13-Tridecandisäure, 1,14-Tetradecandisäure, 1,16-Hexadecandisäure und Mischungen hiervon.

Nach einer weiteren bevorzugten Ausführungsform der vorliegenden Erfindung ist das Lactam und/oder die α,ω-Aminocarbonsäuren ausgewählt aus der Gruppe bestehend aus Caprolactam (CL), α,ω-Aminocapronsäure, α,ω-Aminoheptansäure, Capryllactam, α,ω-Aminoctansäure, α,ω-Aminononansäure, α,ω-Aminodecansäure, α,ω-Aminoundecansäure (AUA), Laurinlactam (LL) und α,ω-Aminododecansäure (ADA), besonderes bevorzugt sind Caprolactam, α,ω-Aminocapronsäure, Laurinlactam, α,ω-Aminoundecansäure und α,ω-Aminododecansäure und Mischungen daraus. Bevorzugt sind die Lactame und/oder Aminocarbonsäuren ausgewählt aus der Gruppe bestehend aus Caprolactam, Aminocapronsäure, Aminoundecansäure, Laurinlactam und Aminododecansäure und Mischungen hiervon.

Gemäß einer anderen bevorzugten Ausführungsform ist die Komponente (A1) ein aliphatisches Homopolyamid ausgewählt aus der Gruppe bestehend aus PA9, PA10, PA11, PA414, PA415, PA416, PA417, PA418, PA513, PA514, PA515, PA516, PA517, PA518, PA612, PA613, PA614, PA615, PA616, PA617, PA711, PA712, PA713, PA714, PA715, PA716, PA810, PA811, PA812, PA813, PA814, PA815, PA99, PA910, PA911, PA912, PA913, PA914, PA108, PA109, PA1010, PA1011, PA1012, PA1013, PA117, PA118, PA119, PA1110, PA1111, PA1112, PA126, PA127, PA128, PA129, PA1210, PA1211, PA136, PA137, PA138, PA139, PA1310, PA146, PA147, PA148, PA149. Bevorzugte Homopolyamide sind PA1010, PA1012, PA612, PA614, PA516, PA616 und Mischungen daraus und bevorzugt sind PA614 und PA616.

Weiterhin sind Polyamide, die durch Copolymerisation/Cokondensation zweier oder mehrerer oben genannter Polyamideinheiten auch unter Einbezug weiterer Polyamideinheiten, erhältlich sind, oder Mischungen mehrerer Polyamide als Komponente (A1) geeignet, wobei das Mischungsverhältnis beliebig ist, solange ein C/N-Verhältnis im Bereich von 9 bis 11,5, bevorzugt von 10 bis 11 und insbesondere bevorzugt von 11 eingehalten wird. Beispiele für solche Copolyamide sind: PA616/1016, PA916/616, PA616/1010, PA516/616, PA614/616, PA612/616, PA610/616.

### Komponente (A2)

Komponente (A2) ist mindestens ein teilkristallines, aliphatisches Polyamid mit einem C zu N-Verhältnis von wenigstens 12.

Gemäß einer bevorzugten Ausführungsform vorliegender Erfindung weist Komponente (A2) ein C zu N-Verhältnis von 12 bis 13 und bevorzugt von 12 auf.

Nach einer anderen bevorzugten Ausführungsform weist Komponente (A2) eine relative Viskosität von 1,7 bis 3,0, bevorzugt von 1,8 bis 2,7 und besonders bevorzugt von 1,90 bis 2,40 auf. Die relative Viskosität wird dabei bei 20°C gemessen nach ISO 307 (2007) in einer Lösung von 0,5 g Polymer in 100 ml m-Kresol.

Eine weitere bevorzugte Ausführungsform ist dadurch gekennzeichnet, dass Komponente (A2) entweder ein ausgeglichenes Endgruppenverhältnis aufweist, d.h. die Differenz zwischen Amino- und Carboxyl-Endgruppen beträgt höchstens 15 mmol/kg, insbesondere höchstens 10 mmol/kg oder, dass die Amino- oder die Carboxyl-Endgruppen im Überschuss vorliegen, wobei die Konzentration der Aminoendgruppen vorzugsweise im Bereich von 20 bis 120 mmol/kg, besonders bevorzugt im Bereich von 30 bis 100 mmol/kg und insbesondere im Bereich von 30 bis 70 mmol/kg liegt und/oder wobei die Konzentration der Carboxy-Endgruppen vorzugsweise im Bereich von 0 bis 120 mmol/kg, bevorzugt im Bereich von 5 bis 100 mmol/kg und ganz besonders bevorzugt im Bereich von 10 bis 80 mmol/kg liegt. Die Differenz zwischen Amino- und Carboxyl-Endgruppen beträgt dabei wenigstens 20 mmol/kg, bevorzugt wenigstens 25 mmol/kg und insbesondere wenigstens 30 mmol/kg.

Erfindungsgemäß ist Komponente (A2) ein Homopolyamid, welches ausgewählt ist aus der Gruppe bestehend aus PA12, PA717, PA718, PA816, PA817, PA818, PA915, PA916, PA917, PA918, PA1014, PA1015, PA1016, PA1017, PA1018, PA1113, PA1114, PA1115, PA1116, PA1117, PA1118, PA1212, PA1213, PA1214, PA1215, PA1216, PA1217, PA1218, PA1311, PA1312, PA1313, PA1314, PA1315, PA1316, PA1317, PA1318, PA1410, PA1411, PA1412, PA1413, PA1414, PA1415, PA1416, PA1417, PA1418 und Mischungen davon. Bevorzugte Homopolyamide sind ausgewählt aus der Gruppe bestehend aus PA12, PA1014, PA916, PA1016, PA1212, und Mischungen daraus und besonders bevorzugt als Komponente (A2) sind PA12 und PA1016. Weiterhin sind als Komponente (A2) Polyamide bevorzugt, die durch Copolymerisation/Cokondensation zweier oder mehrerer oben genannter Polyamideinheiten, auch unter Einbezug weiterer Polyamideinheiten, erhältlich sind, oder Mischungen mehrerer Polyamide, geeignet, wobei das Mischungsverhältnis beliebig ist, solange ein C/N-Verhältnis von wenigstens 12, bevorzugt im Bereich von 12 bis 13, insbesondere bevorzugt von 12 eingehalten wird.

### Komponente (B)

Komponente (B) ist ein Füllstoff, der in 10 bis 45 Gew.-% in der Polyamid-Formmasse (I) enthalten ist. Die Füllstoffe können sowohl faserförmig wie teilchenförmig, einzeln oder im Gemisch, vorliegen.

Gemäß einer bevorzugten Ausführungsform vorliegender Erfindung ist Komponente (B) mit 15 bis 40 Gew.-%, bevorzugt mit 20 bis 35 Gew.-% und besonders bevorzugt mit 25 bis 35 Gew.-% in der Polyamid-Formmasse (I) enthalten, wobei sich diese Mengenangaben auf die Summe der Komponenten (A) bis (C) bzw. das Gesamtgewicht der Polyamid-Formmasse (I) beziehen.

Die Komponente (B) kann sowohl faserförmige Verstärkungsmittel als auch weitere partikuläre Füllstoffe enthalten. Insbesondere wird bevorzugt, wenn (B) ausschließlich aus faserförmigen Verstärkungsmitteln, ausgewählt aus der Gruppe bestehend aus Glasfasern, Kohlenstofffasern, Borfasern, Aramidfasern, Basaltfasern und Mischungen davon, besteht.

Gemäß einer bevorzugten Ausführungsform der erfindungsgemäßen Polyamid-Formmasse wird die Komponente (B) vollständig aus Glasfasern gebildet.

Die verwendeten Glasfasern besitzen eine Querschnittsfläche, die entweder kreisförmig (oder synonym rund) oder nicht-kreisförmig (oder synonym flach) ist, wobei im letzteren Fall das Abmessungsverhältnis von der Haupt-Querschnittsachse zur Neben-Querschnittsachse mindestens 2, z.B. von 2.5 bis 4.5 beträgt.

Die Verstärkung mit Glasfasern kann mit Kurzfasern (z.B. Schnittglas mit einer Länge von 2 bis 50 mm) oder Endlosfasern (Langglas oder Rovings) erfolgen.

In einer bevorzugten Ausführungsform sind die erfindungsgemäß eingesetzten Glasfasern Kurzglasfasern mit einem Durchmesser im Bereich von 6 bis 20 und bevorzugt von 9 bis 12 µm. Die Glasfasern liegen in Form von Schnittglas mit einer Länge von 2 bis 50 mm vor. Insbesondere werden erfindungsgemäß E-und/oder S-Glasfasern verwendet. Es können aber auch alle anderen Glasfasersorten, wie z. B. A-, C-, D-, M-, R-Glasfasern oder beliebige Mischungen davon oder Mischungen mit E- und/oder S-Glasfasern eingesetzt werden. Es werden die für Polyamid üblichen Schlichten, wie z. B. diverse Aminosilanschlichten, verwendet, wobei hochtemperaturstabile Schlichten bevorzugt werden.

In einer weiteren bevorzugten Ausführungsform sind die eingesetzten Glasfasern Langglasfasern (Rovings, Endlosglasfasern). Die als Roving eingesetzten Glasfasern weisen einen Durchmesser von 10 bis 20 µm, bevorzugt von 12 bis 17 µm auf. Insbesondere werden E-Glasfasern verwendet. Neben den bevorzugten E-Glasfasern, werden insbesondere S-Glasfasern eingesetzt, da sie gegenüber den E-Glasfasern eine um 30% höhere Zugfestigkeit besitzen. Es können aber auch alle anderen Glasfasersorten, wie z.B. A-, C-, D-, M, R-Glasfasern oder beliebige Mischungen davon oder Mischungen mit E- und/oder S-Glasfasern eingesetzt werden.

Bei den flachen Glasfasern, also Glasfasern mit nicht-kreisförmiger Querschnittsfläche, werden solche mit einem Abmessungsverhältnis von der Hauptquerschnittsachse zur senkrecht darauf stehender Nebenquerschnittsachse von mehr als 2, bevorzugt von 2.5 bis 4.5, insbesondere von 3 bis 4 bevorzugt eingesetzt. Diese sogenannten flachen Glasfasern weisen eine ovale, elliptische, mit Einschnürung(en) versehene elliptische (sogenannte Kokon- oder cocoon-Faser), polygonale, rechteckige oder nahezu rechteckige Querschnittsfläche auf. Ein weiteres kennzeichnendes Merkmal der eingesetzten flachen Glasfasern besteht darin, dass die Länge der Hauptquerschnittsachse bevorzugt im Bereich von 6 bis 40 µm, insbesondere im Bereich von 15 bis 30 µm und die Länge der Nebenquerschnittsachse im Bereich von 3 bis 20 µm, insbesondere im Bereich von 4 bis 10 µm liegt. Dabei weisen die flachen Glasfasern eine möglichst hohe Packungsdichte auf, d.h. die Glasquerschnittsfläche füllt ein gedachtes, den Glasfaserquerschnitt möglichst exakt umgebenden Rechteck zu mindestens 70 %, bevorzugt mindestens 80 % und insbesondere bevorzugt zu mindestens 85 % aus.

Zur Verstärkung der erfindungsgemäßen Formmassen können auch Mischungen von Glasfasern mit kreisförmigem und nicht-kreisförmigem Querschnitt verwendet werden, wobei der Anteil an flachen Glasfasern bevorzugtermaßen überwiegt, d.h. mehr als 50 Gew.-% der Gesamtmasse der Fasern ausmacht.

Die Glasfasern können mit einer für Thermoplaste, insbesondere für Polyamid geeigneten Schlichte, enthaltend einen Haftvermittler auf Basis einer Amino- oder Epoxysilanverbindung, versehen sein.

Die flachen Glasfasern der Komponente (B) sind dabei z.B. bevorzugt als E-Glasfasern gemäß ASTM D578-00 mit nicht-kreisförmigem Querschnitt ausgewählt, vorzugsweise aus 52 bis 62 % Siliciumdioxid, 12 bis 16 % Aluminiumoxid, 16 bis 25 % Calciumoxid, 0 bis 10 % Borax, 0 bis 5 % Magnesiumoxid, 0 bis 2 % Alkalioxide, 0 bis 1.5 % Titandioxid und 0 bis 0.3 % Eisenoxid. Die Glasfasern der Komponente (B) weisen bevorzugt als flache E-Glasfasern eine Dichte von 2.54 bis 2.62 g/cm³, einen Zug-E-Modul von 70 bis 75 GPa, eine Zugfestigkeit von 3000 bis 3500 MPa und eine Reißdehnung von 4.5 bis 4.8 % auf, wobei die mechanischen Eigenschaften an Einzelfasern mit einem Durchmesser von 10 µm und eine Länge von 12.7 mm bei 23°C und einer relativen Luftfeuchte von 50 % bestimmt wurden.

Die Komponente (B) kann des weiteren Füllstoffe, gegebenenfalls in oberflächenbehandelter Form enthalten, ausgewählt aus der folgenden Gruppe: Kaolin, calciniertes Kaolin, Talkum, Talk, Glimmer, Silikat, Quarz, Titandioxid, Wollastonit, amorphe Kieselsäuren, Magnesiumcarbonat, Magnesiumhydroxid, Kreide, Kalk, Feldspat, Bariumsulfat, Voll- oder Hohl-Glaskugeln oder gemahlenes Glas, insbesondere gemahlene Glasfasern, dauerhaft magnetische bzw. magnetisierbare Metallverbindungen und/oder Legierungen, sowie Mischungen der Elemente aus dieser Gruppe. Besonders bevorzugt als Füllstoff werden Mikroglaskugeln mit einem mittleren Durchmesser im Bereich von 5 bis 100 µm, da diese dem Formteil tendenziell isotrope Eigenschaften verleihen und damit die Herstellung von Formteilen mit niedrigen Verzug erlauben.

Als Füllstoff können die erfindungsgemäßen thermoplastischen Formmassen vorzugsweise also einen teilchenförmigen Füllstoff oder eine Mischung aus zwei oder mehr unterschiedlichen Füllstoffen auch in Kombination mit Verstärkungsstoffen enthalten.

Eine bevorzugte Ausführungsform der Polyamid-Formmasse nach der Erfindung zeichnet sich dadurch aus, dass die Komponente (B) im Bereich von 15 bis 40 Gew.-%, bevorzugt im Bereich von 20 bis 40 Gew.-%, weiter bevorzugt von 25 bis 35 Gew.-%, insbesondere bevorzugt in Form von Glasfasern mit nicht-kreisförmigem Querschnitt und einem Abmessungsverhältnis von der Haupt-Querschnittsachse zur Neben-Querschnittsachse im Bereich von 2.5 bis 4.5, vorliegt.

Gemäß einer bevorzugten Ausführungsform vorliegender Erfindung besteht Komponente (B) ausschliesslich aus einem Glasfüller ausgewählt aus der Gruppe bestehend aus Glasfasern, gemahlenen Glasfasern, Glaspartikeln, Glas-Flakes, Glas-Kugeln, Glas-Hohlkugeln oder aus Kombinationen aus den vorgenannten. Werden als Komponente (B) Glaskugeln oder Glaspartikel ausgewählt, beträgt deren mittlerer Durchmesser 0,3 bis 100 µm, bevorzugt 0,7 bis 30 µm, besonders bevorzugt 1 bis 10 µm.

Eine andere bevorzugte Ausführungsform der vorliegenden Erfindung sieht vor, dass die Glassorte von Komponente (B) ausgewählt ist aus der Gruppe bestehend aus E-Glas, ECR-Glas, S-Glas, A-Glas, AR-Glas und R-Glas, insbesondere E- und S-Glas, sowie Mischungen aus diesen Glassorten.

Bei Komponente (B) handelt es sich gemäß einer bevorzugten Ausführungsform um eine hochfeste Glasfaser oder sogenannte S-Glasfaser. Diese beruht vorzugsweise auf dem ternären System Siliciumdioxid-Aluminiumoxid-Magnesiumoxid oder auf dem quaternären System Siliciumdioxid-Aluminiumoxid-Magnesiumoxid-Calciumoxid, wobei eine Zusammensetzung von 58 bis 70 Gew.-% Siliciumdioxid (SiO₂), 15 bis 30 Gew.-% Aluminiumoxid (Al₂O₃), 5 bis 15 Gew.-% Magnesiumoxid (MgO), 0 bis 10 Gew.-% Calciumoxid (CaO) und 0 bis 2 Gew.-% weitere Oxide, wie z.B. Zirkoniumdioxid (ZrO₂), Boroxid (B₂O₃), Titandioxid (TiO₂), Eisenoxid (Fe₂O₃), Natriumoxid, Kaliumoxid oder Lithiumoxid (Li₂O) bevorzugt wird.
Nach einer weiteren bevorzugten Ausführungsform besitzt die hochfeste Glasfaser eine Zusammensetzung von 60 bis 67 Gew.-% Siliciumdioxid (SiO₂), 20 bis 28 Gew.-% Aluminiumoxid (Al₂O₃), 7 bis 12 Gew.-% Magnesiumoxid (MgO), 0 bis 9 Gew.-% Calciumoxid (CaO) sowie 0 bis 1,5 Gew.-% weitere Oxide, wie z.B. Zirkoniumdioxid (ZrO₂), Boroxid (B₂O₃), Titandioxid (TiO₂), Eisenoxid (Fe₂O₃), Natriumoxid, Kaliumoxid Lithiumoxid (Li₂O).

Insbesondere bevorzugt ist es, wenn die hochfeste Glasfaser die nachfolgende Zusammensetzung aufweist: 62 bis 66 Gew.-% Siliciumdioxid (SiO₂), 22 bis 27 Gew.-% Aluminiumoxid (Al₂O₃), 8 bis 12 Gew.-% Magnesiumoxid (MgO), 0 bis 5 Gew.-% Calciumoxid (CaO), 0 bis 1 Gew.-% weitere Oxide, wie z.B. Zirkoniumdioxid (ZrO₂), Boroxid (B₂O₃), Titandioxid (TiO₂), Eisenoxid (Fe₂O₃), Natriumoxid, Kaliumoxid und Lithiumoxid (Li₂O).

Die hochfesten Glasfasern (S-Glasfasern) weisen bevorzugtermaßen eine Zugfestigkeit von wenigstens 3700 MPa, vorzugsweise von wenigstens 3800 oder 4000 MPa, und/oder eine Reißdehnung von wenigstens 4,8 %, vorzugsweise von wenigstens 4,9 oder 5,0 % und/oder einen Zug-E-Modul von mehr als 75 GPa, vorzugsweise von mehr als 78 oder 80 GPa auf, wobei diese Glaseigenschaften an Einzelfasern (pristine single filaments) mit einem Durchmesser von 10 µm und eine Länge von 12,7 mm bei einer Temperatur von 23°C und einer relativen Luftfeuchte von 50 % zu bestimmen sind.

Konkrete Beispiele für diese hochfesten Glasfasern sind S-Glasfasern von Owens Corning mit 995-Schlichte, T-Glasfasern von Nittobo, HiPertex von 3B, HS4-Glasfasern von Sinoma Jinjing Fiberglass, R-Glasfasern von Vetrotex sowie S-1-und S-2-Glasfasern von AGY.

Die oben genannten Glasfasern können in Form von Kurzfasern, bevorzugt in Form von Schnittglas, mit einer Länge im Bereich von 0,2 bis 20 mm, oder in Form von Endlosfasern vorliegen. Weiterhin weisen die Glasfasern bevorzugt eine kreisförmige oder nicht-kreisförmige Querschnittsfläche auf.

Glasfasern mit kreisförmigem Querschnitt, also runde Glasfasern, haben typischerweise einen Durchmesser im Bereich von 5 bis 20 µm, bevorzugt im Bereich von 6 bis 17 µm und besonders bevorzugt im Bereich von 6 bis 13 µm. Sie werden bevorzugt als Kurzglasfaser (Schnittglas mit einer Länge von 0.2 bis 20 mm, bevorzugt 2 bis 12 mm) eingesetzt.

### Komponente (C)

Die erfindungsgemäße Polyamid-Formmasse (I) enthält 0 bis 5 Gew.-% mindestens eines Zusatzstoffes als Komponente (C).

Gemäß einer bevorzugten Ausführungsform enthält die erfindungsgemäße Polyamid-Formmasse (I) 0 bis 3 oder 0,1 bis 3,0 Gew.-% und bevorzugt 0,2 bis 2,0 Gew.-% mindestens eines Zusatzstoffes als Komponente (C).

Nach einer bevorzugten Ausführungsform ist Komponente (C) ausgewählt aus der Gruppe bestehend aus Schmiermitteln, Wärmestabilisatoren, Verarbeitungsstabilisatoren, Viskositätsmodifikatoren, Oxidationsverzögerern, Mitteln gegen Wärmezersetzung und Zersetzung durch ultraviolettes Licht, Gleit- und Entformungsmitteln, Färbemitteln, insbesondere Farbstoffen und Pigmenten, Keimbildungsmitteln, Weichmachern, anorganischen Pigmenten, organischen Pigmenten und Mischungen davon.

Nach einer besonders bevorzugten Ausführungsform enthält die Polyamid-Formmasse (I) als Komponente (C) mindestens ein Schmiermittel, wobei dieses bevorzugt in einem Anteil von 0 bis 2 Gew.-% , insbesondere bevorzugt von 0,05 bis 2.0 Gew.-%, besonders bevorzugt von 0,1 bis 1,5 Gew.-% und am bevorzugtesten von 0,1 bis 1,0 Gew.-%, jeweils bezogen auf das Gesamtgewicht der Komponenten (A) bis (C), enthalten ist.

Hierbei bevorzugt sind Al-, Alkali-, Erdalkalisalze, Ester oder Amide von Fettsäuren mit 10 bis 44 C-Atomen und vorzugsweise mit 14 bis 44 C-Atomen, wobei die Metallionen Na, Mg, Ca und Al bevorzugt und Ca oder Mg besonders bevorzugt sind. Besonders bevorzugte Metallsalze sind Ca-Stearat und Ca-Montanat sowie Al-Stearat. Die Fettsäuren können 1- oder 2-wertig sein. Als Beispiele seien Pelargonsäure, Palmitinsäure, Laurinsäure, Margarinsäure, Dodecandisäure, Behensäure und die besonders bevorzugten Stearinsäure, Caprinsäure sowie Montansäure (Mischung von Fettsäuren mit 30 bis 40 C-Atomen), genannt.

Weiterhin sind aliphatischen Alkohole, die 1- bis 4-wertig sein können, als Schmiermittel bevorzugt. Bevorzugt sind diese Alkohole ausgewählt aus der Gruppe bestehend aus n-Butanol, n-Octanol, Stearylalkohol, Ethylenglykol, Propylenglykol, Neopentylglykol, Glycerin, Pentaerythrit und Mischungen daraus, wobei Glycerin und Pentaerythrit bevorzugt sind.
Außerdem sind aliphatische Amine, die 1- bis 3-wertig sein können, bevorzugte Schmiermittel. Bevorzugte Amine sind ausgewählt aus der Gruppe bestehend aus Stearylamin, Ethylendiamin, Propylendiamin, Hexamethylendiamin, Di(6-Aminohexyl)amin und Mischungen hiervon, wobei Ethylendiamin und Hexamethylendiamin besonders bevorzugt sind.

Bevorzugte Ester oder Amide von Fettsäuren sind ausgewählt aus der Gruppe bestehend aus Glycerindistearat, Glycerintristearat, Ethylendiamindistearat, Glycerinmonopalmitat, Glycerintrilaurat, Glycerinmonobehenat, Pentaerythrittetrastearat und Mischungen hiervon.

Nach einer weiteren bevorzugten Ausführungsform enthält die Polyamid-Formmasse (I) als Komponente (C) mindestens einen Wärmestabilisator, wobei dieses bevorzugt in einem Anteil von 0 bis 3 Gew.-% , insbesondere bevorzugt von 0,02 bis 2,0 Gew.-% und besonders bevorzugt von 0,1 bis 1,5 Gew.-%, jeweils bezogen auf das Gesamtgewicht der Komponenten (A) bis (C), enthalten ist.

Gemäß einer bevorzugten Ausführungsform sind die Wärmestabilisatoren ausgewählt aus der Gruppe bestehend aus
- Verbindungen des ein- oder zweiwertigen Kupfers, z.B. Salze des ein- oder zweiwertigen Kupfers mit anorganischen oder organischen Säuren oder ein- oder zweiwertigen Phenolen, die Oxide des ein- oder zweiwertigen Kupfers, oder die Komplexverbindungen von Kupfersalzen mit Ammoniak, Aminen, Amiden, Lactamen, Cyaniden oder Phosphinen, bevorzugt Cu(I)- oder Cu(II)-Salze der Halogenwasserstoffsäuren, der Cyanwasserstoffsäuren oder die Kupfersalze der aliphatischen Carbonsäuren. Besonders bevorzugt sind die einwertigen Kupferverbindungen CuCI, CuBr, Cul, CuCN und Cu₂O, sowie die zweiwertigen Kupferverbindungen CuCl₂, CuSO₄, CuO, Kupfer(II)acetat oder Kupfer(II)stearat. Sofern eine Kupferverbindung verwendet wird, beträgt vorzugsweise die Menge an Kupfer 0,003 bis 0,5, insbesondere 0,005 bis 0,3 und besonders bevorzugt 0,01 bis 0,2 Gew.-%, bezogen auf die Summe der Komponenten (A) bis (C).
   Die Kupferverbindungen sind handelsüblich bzw. ihre Herstellung ist dem Fachmann bekannt. Die Kupferverbindungen können als solche oder in Form von Konzentraten eingesetzt werden. Unter Konzentrat ist dabei ein Polymer, vorzugsweise gleicher chemischer Natur wie Komponente (A), zu verstehen, welches das Kupfersalz in hoher Konzentration enthält. Der Einsatz von Konzentraten ist ein übliches Verfahren und wird besonders häufig dann angewandt, wenn sehr geringe Mengen eines Einsatzstoffes zu dosieren sind. Vorteilhafterweise werden die Kupferverbindungen in Kombination mit weiteren Metallhalogeniden, insbesondere Alkalihalogeniden, wie Nal, KI, NaBr, KBr, eingesetzt, wobei das molare Verhältnis von Metallhalogenid zu Kupferhalogenid 0,5 bis 20, bevorzugt 1 bis 10 und besonders bevorzugt 3 bis 7 beträgt.
- Stabilisatoren auf Basis sekundärer aromatischer Amine, wobei diese Stabilisatoren vorzugsweise in einer Menge von 0,2 bis 2, bevorzugt von 0,2 bis 1,5 Gew.-% vorliegen,
- Stabilisatoren auf Basis sterisch gehinderter Phenole, wobei diese Stabilisatoren vorzugsweise in einer Menge von 0,1 bis 1,5, bevorzugt von 0,2 bis 1,0 Gew.-% vorliegen, und
- Phosphiten und Phosphoniten, sowie
- Mischungen der vorstehend genannten Stabilisatoren.

Besonders bevorzugte Beispiele für erfindungsgemäß einsetzbare Stabilisatoren auf Basis sekundärer aromatischer Amine sind Addukte aus Phenylendiamin mit Aceton (Naugard A), Addukte aus Phenylendiamin mit Linolen, Naugard 445, N,N'-Dinaphthyl-p-phenylendiamin, N-Phenyl-N'-cyclohexyl-p-phenylendiamin oder Mischungen von zwei oder mehreren davon.
Als sterisch gehinderte Phenole eignen sich prinzipiell alle Verbindungen mit phenolischer Struktur, die am phenolischen Ring mindestens eine sterisch anspruchsvolle Gruppe aufweisen. Bevorzugte Beispiele für erfindungsgemäß einsetzbare Stabilisatoren auf Basis sterisch gehinderter Phenole sind N,N'-Hexamethylen-bis-3-(3,5-di-tert-butyl-4-hydroxyphenyl)-propionamid, Bis-(3,3-bis-(4'-hydroxy-3'-tert-butylphenyl)-butansäure)-glykolester, 2,1'-Thioethylbis-(3-(3,5-di.tert-butyl-4-hydroxyphenyl)-propionat, 4-4'-Butyliden-bis-(3-methyl-6-tert.-butylphenol), Triethylenglykol-3-(3-tert-butyl-4-hydroxy-5-methylphenyl)-propionat oder Mischungen von zweien oder mehreren dieser Stabilisatoren.

Bevorzugte Phosphite und Phosphonite sind Triphenylphosphit, Diphenylalkylphosphit, Phenyldialkylphosphit, Tris(nonylphenyl)phosphit, Trilaurylphosphit, Trioctadecylphosphit, Distearylphentaerythritoldiphosphit, Tris(2,4-di-tert-butylphenyl)phosphit, Diisodecylpentaerythritoldiphosphit, Bis(2,4-di-tert-butylphenyl)pentaerythritoldiphosphit, Bis(2,6-di-tert-butyl-4-methylphenyl)-pentaerythritoldiphosphit, Diisodecyloxypentaerythritoldiphosphit, Bis(2,4-di-tert-butyl-6-methylphenyl)pentaerythritoldiphosphit, Bis(2,4,6-tris-(tert-butylphenyl))pentaerythritol-diphosphit, Tristearylsorbitoltriphosphit, Tetrakis(2,4-di-tert-butylphenyl)-4,4'-biphenylendiphosphonit, 6-Isooctyloxy-2,4,8,10-tetra-tert-butyl-12H-dibenz-[d,g]-1,3,2-dioxaphosphocin, 6-Fluoro-2,4,8,10-tetra-tert-butyl- 12-methyl-dibenz[d,g]-1,3,2-dioxaphosphocin, Bis(2,4-di-tert- butyl-6-methylphenyl)methylphosphit und Bis(2,4-di-tert-butyl-6-methylphenyl)ethylphosphit. Insbesondere werden bevorzugt Tris[2-tert-butyl-4-thio(2'-methyl-4'-hydroxy-5'-tert-butyl)-phenyl-5-methyl]phenyl-phosphit und Tris(2,4-di-tert-butylphenyl)phosphit (Hostanox® PAR24: Handelsprodukt der Firma Clariant, Basel).

Eine bevorzugte Ausführungsform des Wärmestabilisators besteht in der Kombination von organischen Hitzestabilisatoren (insbesondere Hostanox PAR 24 und Irganox 1010), einem Bisphenol A basiertem Epoxid (insbesondere Epikote 1001) und einer Kupferstabilisierung auf Basis von Cul und KI. Eine kommerziell erhältliche Stabilisatormischung, bestehend aus organischen Stabilisatoren und Epoxiden ist beispielsweise Irgatec NC66 von Ciba Spez. GmbH. Insbesondere bevorzugt ist eine Wärmestabilisierung ausschließlich auf Basis von Cul und KI.

Nach einer weiteren bevorzugten Ausführungsform enthält die Polyamid-Formmasse (I) als Komponente (C) mindestens einen Viskositätsmodifikator, wobei dieser bevorzugt in einem Anteil von 0.1 bis 5 Gewichtsprozent, bevorzugt in 0.1 bis 3 Gewichtsprozent und besonders bevorzugt in 0.2 bis 2 Gewichtsprozent bezogen auf das Gesamtgewicht der Komponenen (A) bis (C), vorliegt.

Die erfindungsgemäße Polyamid-Formmasse (I) enthält vorzugsweise des Weiteren einen Viskositätsmodifikator (Komponente C), welcher bei der thermoplastischen Verarbeitung zu einem Molekulargewichtsaufbau durch Kettenverlängerung der Polyamidmoleküle in den Komponenten (A1) und (A2) führt. Eine bevorzugte Variante eines Viskositätsmodifikators ist ein Polycarbonat in einem säureterminierten Polyamid. Ein solcher Viskositätsmodifikator ist beispielsweise unter der Bezeichnung Brüggolen® M 1251 von der Firma Brüggemann Chemical (Deutschland) im Handel erhältlich, wobei es sich um ein Masterbatch aus einem niedrigviskosen Polycarbonat in einem säureterminierten Polyamid 6 handelt. Eine andere bevorzugte Variante eines Viskositätsmodifikators ist ein acrylsäuremodifiziertes Polyethylen hoher Dichte, vorzugsweise mit einem Pfropfgrad im Bereich von 5 bis 6 %. Ein solcher Polymer-Modifikator wird beispielsweise von der Firma Chemtura unter dem Handelsnamen Polybond 1009 vertrieben und weist einen Pfropfgrad von 6 % auf. Ebenfalls können Poly(ethylen-maleinsäureanhydrid)-copolymere verwendet werden.

Weitere bevorzugte Viskositätsmodifikatoren sind aromatische Polycarbodiimide, welche z.B. von der Firma Rhein-Chemie (Deutschland) unter dem Namen Stabaxol® P vertrieben werden. Andere bevorzugte Viskositätsmodifikatoren sind acrylsäuremodifizierte lineare Polyethylene niedriger Dichte, wie z.B. das von der Firma OKA-Tec angebotene Okabest® 2400. Weitere bevorzugte Viskositätsmodifikatoren sind 1,1'-Carbonyl-bis-caprolactamate, welche z.B. von der Firma DSM unter dem Namen Allinco® CBC vertrieben werden, sowie Bisoxazoline, wie z.B. 1,4-Phenylen-bis-(2-oxazolin).

Weiterhin kann die erfindungsgemäße Polyamid-Formmasse (I) als Komponente (C) übliche Verarbeitungshilfsmittel wie Stabilisatoren, Oxidationsverzögerer, weitere Mittel gegen Wärmezersetzung und Zersetzung durch ultraviolettes Licht, Gleit- und Entformungsmittel, Färbemittel wie Farbstoffe und Pigmente, Keimbildungsmittel, Weichmacher, Flammschutzmittel usw. enthalten.

Als Beispiele für Oxidationsverzögerer und Wärmestabilisatoren seien Phosphite und weitere Amine (z.B. TAD), Hydrochinone, verschiedene substituierte Vertreter dieser Gruppen und deren Mischungen in Konzentrationen bis zu 1 Gew.-%, bezogen auf das Gewicht der Polyamid-Formmasse (I) genannt.

Als UV-Stabilisatoren, die im Allgemeinen in Mengen bis zu 2 Gew.-%, bezogen auf das Gewicht der Polyamid-Formmasse (I), verwendet werden, seien verschiedene substituierte Resorcine, Salicylate, Benzotriazole und Benzophenone genannt.

Es können anorganische Pigmente, wie Titandioxid, Ultramarinblau, Eisenoxid und Ruß und/oder Grafit, weiterhin organische Pigmente, wie Phthalocyanine, Chinacridone, Perylene sowie Farbstoffe, wie Nigrosin und Anthrachinone als Farbmittel zugesetzt werden.

Als Keimbildungsmittel können Polyamid PA22, Natriumphenylphosphinat, Aluminiumoxid, Siliziumdioxid, Alumosilikat, Kaolin, Talk sowie bevorzugt Talkum eingesetzt werden.

### Bevorzugte Polyamid-Formmassen (I)

Eine bevorzugte Polyamid-Formmasse (I) enthält die folgenden Komponenten (A) bis (C) oder besteht besonders bevorzugt aus diesen Komponenten:
(A) 58 bis 84.9 Gew.-% einer Mischung bestehend aus den Polyamiden (A1) und (A2); wobei
   (A1) 50 bis 95 Gew.-% eines Polyamids ausgewählt aus der Gruppe bestehend aus PA516, PA614, PA616, PA616/614, PA616/612 oder PA516/616 und Mischungen davon ist; und
   (A2) 5 bis 50 Gew.-% eines Polyamids ausgewählt aus der Gruppe bestehend aus PA12, PA916, PA1016 oder Mischungen daraus ist; wobei die Summe aus (A1) und (A2) 100 Gew.-% (A) ergibt;
(B) 15 bis 40 Gew.-% Glasfasern;
(C) 0.1 bis 2.0 Gew.-% mindestens eines Zusatzstoffes;
wobei sich die Gewichtsanteile der Komponenten (A) bis (C) auf 100 Gew.-% ergänzen.

Eine andere bevorzugte Polyamid-Formmasse (I) enthält die folgenden Komponenten (A) bis (C) oder besteht besonders bevorzugt aus diesen Komponenten:
(A) 62 bis 75 Gew.-% einer Mischung bestehend aus den Polyamiden (A1) und (A2); wobei
   (A1) 60 bis 90 Gew.-% eines Polyamids ausgewählt aus der Gruppe bestehend aus PA516, PA614, PA616 oder PA516/616 und Mischungen davon ist; und
   (A2) 10 bis 40 Gew.-% eines Polyamids ausgewählt aus der Gruppe bestehend aus PA12, PA916, PA1016 oder Mischungen daraus ist; wobei die Summe aus (A1) und (A2) 100 Gew.-% (A) ergibt;
(B) 25 bis 35 Gew.-% Glasfasern;
(C) 0 bis 3 Gew.-% mindestens eines Zusatzstoffes;
wobei sich die Gewichtsanteile der Komponenten (A) bis (C) auf 100 Gew.-% ergänzen.

Gemäß einer anderen bevorzugten Ausführungsform weist ein Probekörper aus der Polyamid-Formmasse (I)
- eine Bruchfestigkeit bestimmt nach ISO 527 von mindestens 60 MPa, bevorzugt mindestens 75 MPa und besonders bevorzugt mindestens 80 MPa auf; und/oder
- eine Bruchdehnung bestimmt nach ISO 527 von mindestens 5 %, bevorzugt mindestens 6 % und besonders bevorzugt mindestens 8 % auf; und/oder
- einen Zug-E-Modul bestimmt nach ISO 527 von mindestens 3000 MPa, bevorzugt mindestens 4000 MPa und besonders bevorzugt mindestens 6000 MPa auf; und/oder
- eine Charpy-Kerbschlagzähigkeit bei 23°C bestimmt nach ISO 179/2eU von mindestens 7 kJ/m², bevorzugt mindestens 8 kJ/m² und besonders bevorzugt mindesten 11 kJ/m² auf; und/oder
- eine Charpy-Schlagzähigkeit bei 23°C bestimmt nach ISO 179/2eA von mindestens 70 kJ/m², bevorzugt mindestens 80 kJ/m² und besonders bevorzugt mindestens 85 kJ/m² auf; und/oder
- der angussferne Teil eines ISO-Zugstabs (Typ A1, Masse 170 x 20/10 x4), der mit einer Geschwindigkeit von 3 m/min bei 23°C über eine Stahlplatte bewegt wird (Auflagefläche 20 x 4 mm²) nach 8 Stunden einen Abrieb von maximal 1 mg, bevorzugt von maximal 0,9 mg und besonders bevorzugt von maximal 0,8 mg, auf.

### Gegenstand

Der erfindungsgemäße Gegenstand kann ein- oder mehrschichtig sein. Einschichtige Gegenstände enthalten oder bestehen aus der Polyamid-Formmasse (I), wie oben definiert.

Bevorzugte mehrschichtige Gegenständen weisen mindestens zwei Schichten auf, wobei mindestens eine der Schichten die Polyamid-Formmasse (I), wie oben definiert, enthält und bevorzugt aus dieser besteht.

Dabei ist die Schicht aus der Polyamid-Formmasse (I), die eine erhöhte Abriebfestigkeit aufweist, im Gegenstand so angeordnet, dass sie Reibung erfährt, beispielsweise in einem Zahnrad als äußere Schicht.

Gemäß einer bevorzugten Ausführungsform ist der Gegenstand dadurch gekennzeichnet, dass die mindestens eine weitere Schicht, eine von der Polyamid-Formmasse (I) verschiedene Polyamid-Formmasse (II) enthält und bevorzugt aus dieser besteht. Bevorzugte Ausführungsformen der Polyamid-Formmasse (II) werden weiter unten definiert.

Gemäß einer weiteren bevorzugten Ausführungsform ist der Gegenstand dadurch gekennzeichnet dass, er ein Zahnrad ist, welches in einem Schneckenradgetriebe eines elektrischen Aktuators, in einer Servolenkung eines Kraftfahrzeugs, in einem Komfortantrieb in einem Kraftfahrzeug, besonders bevorzugt einem Schiebedachantrieb, einem Sitzverstellungsantrieb oder einem Fensterheberantrieb, verwendet wird.

Nach einer weiteren bevorzugten Ausführungsform ist der Gegenstand ein Zahnrad und der Kern-, Schalen- oder Verzahnungsbereich des Zahnrades wird teilweise oder als Ganzes durch die Polyamid-Formmasse (I), wie oben definiert, gebildet wird. Dabei wird besonders bevorzugt der Verzahnungsbereich des Zahnrades teilweise oder als Ganzes durch die Polyamid-Formmasse (I) gebildet.

Der mindestens 2-schichtige Gegenstand kann durch Coextrusion, Mehrkomponenten-Spritzguss oder durch Fügetechniken, wie Laminieren, Kleben, Schweissen von extrudierten oder spritzgegossenen Halbzeugen hergestellt werden. Bevorzugt wird der Gegenstand durch Mehrkomponenten-Spritzguss hergestellt, wobei die mindestens zwei verschiedenen Polyamid-Formmassen (I) und (II) derart nacheinander in das Werkzeug dosiert werden, dass sie beide noch thermoplastisch verformbar sind. Dabei kann das Werkzeug über eine oder mehrere Anspritzstellen verfügen. Bevorzugt besitzt das Werkzeug für jede auszubildende Schicht mindestens eine Anspritzstelle. Besonders bevorzugt weist das Werkzeug jedoch nur eine einzige Anspritzstelle auf, über die die verschiedenen Formmassen dosiert werden. Die zuerst dosierte Formmasse bildet dann die äussere Schicht aus.

### Polyamid- Formmasse (II)

Die Polyamid-Formmasse (II) enthält gemäß einer bevorzugten Ausführungsform die folgenden Komponenten (D) bis (F) und wird besonders bevorzugt aus diesen gebildet.
(D) 35 bis 90, bevorzugt 47 bis 79.9 Gew.-% mindestens eines aliphatischen oder teilaromatischen Polyamids gebildet aus aliphatischen Diaminen mit 4 bis 12, bevorzugt 6 bis 10 Kohlenstoffatomen, aliphatischen Dicarbonsäuren mit 6 bis 12, bevorzugt 6 bis 10 Kohlenstoffatomen und aromatischen Dicarbonsäuren, insbesondere Terephthalsäure und Isophthalsäure;
(E) 10 bis 60, bevorzugt 20 bis 50 Gew.-% mindestens eines Füllstoffes;
(F) 0 bis 5, bevorzugt 0.1 bis 3 Gew.-% mindestens eines Zusatzstoffes;
wobei sich die Gewichtsanteile der Komponenten (D) bis (F) auf 100 Gew.-% ergänzen.

Bevorzugt ist Komponente (D) ausgewählt aus der Gruppe bestehend aus PA6, PA66, PA6/66, PA46, PA56, PA510, PA610, PA612, PA6T/6I, PA6T/66, PA6T/10T, PA9T, PA9T/MT (M = Methyloctan-1,8-diamin), PA10T, PA11/10T, PA12/10T, PA10T/66, PA10T/106, PA10T/610, PA10T/612 und Mischungen davon, insbesondere aus der Gruppe bestehend aus PA6, PA66, PA6/66, PA6T/6I, PA6T/66, PA6T/10T, PA10T/612 und Mischungen davon. Besonders bevorzugt ist (D) PA66 oder eine Mischung aus PA66 und PA6T/6I, wobei PA66 mindestens 50 Gew.-% ausmacht.

Nach einer weiteren bevorzugten Ausführungsform ist Polyamid (D), ausgewählt aus der Gruppe bestehend aus PA66, PA66/6, PA610, PA612, PA12, PA6T/6I, PA6T/66 und Mischungen davon.

Gemäß einer anderen bevorzugten Ausführungsform ist die Komponente (D) ein aliphatisches Homopolyamid ausgewählt aus der Gruppe bestehend aus PA 66, PA 6, PA 66/6 und Mischungen daraus.

Gemäß einer anderen bevorzugten Ausführungsform ist das Polyamid der Komponente (D) ausgewählt aus der Gruppe bestehend aus PA6, PA66, PA6/66, PA6T/6I, PA6T/66, PA6T/10T, PA10T/612 und Mischungen davon, bevorzugt als PA66 oder als Mischung aus PA66 und PA6T/6I.

Gemäß einer besonders bevorzugten Ausführungsform liegt die relative Viskosität von Komponente (D) im Bereich von 1,5 bis 2,7, bevorzugt von 1,6 bis 2,4 und bevorzugt von 1,7 bis 2,3. Die relative Viskosität wird dabei bei 20°C gemessen nach ISO 307 (2007) in einer Lösung von 0,5 g Polymer in 100 ml m-Kresol.

Bevorzugt liegt die Konzentration der Aminoendgruppen von Komponent (D) im Bereich von 20 bis 120, insbesondere im Bereich von 30 bis 100 mmol/kg und die Carboxylendgruppen liegen bevorzugt im Bereich von 0 bis 120 , insbesondere von 10 bis 100 mmol/kg.

Komponente (E) ist bevorzugt ausgewählt aus der Gruppe bestehend aus gemahlenem Glas, Glasfasern mit rundem Querschnitt, Glasfasern mit flachem Querschnitt und Mischungen davon.

Die Komponenten (E) und (F) können die für Polyamid-Formmasse (II) bereits als Komponente (B) bzw. (C) für Polyamid-Formmasse (I) definierten Stoffe sein.

### Verwendung

Die erfindungsgemäße Polyamid-Formmasse (I) kann als verschleissfeste, abriebfeste Beschichtung von Zahnrädern, Lagerschalen, Führungsbuchsen, Lagergehäusen für Getriebe, Tür- oder Fenstergriffen verwendet werden.

Ein bevorzugter Gegenstand ist ein Zahnrad, insbesondere für die Verwendung in einem Schneckenradgetriebe eines elektrischen Aktuators in einer Servolenkung eines Kraftfahrzeugs. Weiterhin kann das Zahnrad in einem Komfortantrieb in einem Kraftfahrzeug, besonders bevorzugt einem Schiebedachantrieb, einem Sitzverstellungsantrieb oder einem Fensterheberantrieb, verwendet werden.

Unter einem Komfortantrieb wird dabei im Rahmen der vorliegenden Erfindung insbesondere ein Fensterheberantrieb, ein Schiebedachantrieb, ein Sitzverstellungsantrieb oder ähnliches verstanden. Derartige Komfortantriebe zeichnen sich dadurch aus, dass das zur Übertragung von Drehmomenten dienende Zahnrad (Getrieberad) in unterschiedlichen Drehrichtungen angetrieben wird, wobei insbesondere stoßartige Belastungen auftreten können, die von dem Getrieberad aufgenommen und übertragen werden müssen. Anhand der nachfolgenden Beispiele soll der erfindungsgemäße Gegenstand näher erläutert werden, ohne diesen auf die hier gezeigten spezifischen Ausführungsformen einschränken zu wollen.

### 1. Messmethoden

Im Rahmen dieser Anmeldung wurden die folgenden Messmethoden verwendet.

### Schmelzpunkt (Tₘ) und Schmelzenthalpie (ΔHₘ)

Der Schmelzpunkt und Schmelzenthalpie wurden nach ISO 11357-3 (2013) am Granulat bestimmt. Die DSC (Differential Scanning Calorimetry) Messungen wurden mit einer Aufheizrate von 20 K/min durchgeführt.

### Glasübergangstemperatur, T_{g}

Die Bestimmung der Glasübergangstemperatur T_{g} erfolgte nach ISO 11357-2 (2013) an Granulat mittels Differential Scanning Calorimetry (DSC). Diese wurde bei jeder der beiden Aufheizungen mit einer Aufheizrate von 20 K/min durchgeführt. Nach der ersten Aufheizung wurde die Probe in Trockeneis abgeschreckt. Die Glasübergangstemperatur (T_{g}) wurde bei der zweiten Aufheizung bestimmt. Der Mittelpunk des Glasübergangbereichs, welcher als Glasübergangstemperatur angegeben wurde, wurde nach der Methode "Half Height" ermittelt.

### Bestimmung der Amino- und Carboxyl-Endgruppenkonzentration

Zu 30 mg der Polymerprobe wurden jeweils 1.5 ml CD₂Cl₂ und 0.3 mL Trifluoressigsäure-Anhydrid zugegeben und die Proben 16 Stunden bei Raumtemperatur geschüttelt. Die NMR Spektren wurden auf einem Bruker AVANCE-III 400 NMR-Spektrometer gemessen. Die chemischen Verschiebungen wurden auf die Signale des Lösungsmittels bei 3.58 ppm (¹H) bzw. 67.57 ppm (¹³C) referenziert. Alle NMR-Experimente wurden unter Verwendung von Bruker Standard-Pulsprogrammen bzw. Parametersätzen aufgenommen (¹H und ¹³C 90º-Pulse von 11.9 bzw. 10.0 s).

### Relative Viskosität, ηᵣₑₗ

Die relative Viskosität wurde gemäß ISO 307 (2007) bei 20°C bestimmt. Dazu wurden 0,5 g Polymergranulat in 100 ml m-Kresol eingewogen, die Berechnung der relativen Viskosität (RV) nach RV = t/t₀ erfolgte in Anlehnung an Abschnitt 11 der Norm.

### Zug E-Modul

Die Bestimmung des Zug-E-Moduls wurde gemäß ISO 527 (2012) bei 23°C mit einer Zuggeschwindigkeit von 1 mm/min an einem ISO-Zugstab (Typ A1, Masse 170 x 20/10 x 4) hergestellt gemäß der Norm: ISO/CD 3167 (2003), durchgeführt.

### Bruchfestigkeit und Bruchdehnung

Die Bestimmung von Bruchfestigkeit und Bruchdehnung wurden gemäß ISO 527 (2012) bei 23°C mit einer Zuggeschwindigkeit von 5 mm/min an einem ISO-Zugstab, Typ A1 (Masse 170 x 20/10 x 4 mm), hergestellt gemäß der Norm ISO/CD 3167 (2003), durchgeführt.

### Schlagzähigkeit nach Charpy

Die Bestimmung der Schlagzähigkeit nach Charpy wurde gemäß ISO 179/2^{∗}eU (1997, ^{∗} 2 = instrumentiert) bei 23°C an einem ISO-Prüfstab, Typ B1 (Masse 80 x 10 x 4 mm), hergestellt gemäß der Norm ISO/CD 3167 (2003), durchgeführt.

### Kerbschlagzähigkeit nach Charpy

Die Bestimmung der Kerbschlagzähigkeit nach Charpy wurde gemäß ISO 179/2^{∗}eA (1997, ^{∗} 2 = instrumentiert) bei 23°C an einem ISO-Prüfstab, Typ B1 (Masse 80 x 10 x 4 mm), hergestellt gemäß der Norm ISO/CD 3167 (2003), durchgeführt.

### Abriebfestigkeit

Der mit einer Last von 34 N beaufschlagte Probenkörper, ein ISO-Zugstab (Typ A1, Masse 170 x 20/10 x 4), wurde mit der angussfernen Seitenfläche (20 x 4 mm) und einer Geschwindigkeit von 3 m/min bei einer Temperatur von 23 °C über eine Stahlplatte hin und her bewegt. Nach 8 Stunden wurde der Abrieb anhand der Gewichtsabnahme des Probenkörpers bestimmt.

### 2 Ausgangsmaterialien

Die in den Beispielen und Vergleichsbeispielen verwendeten Materialien werden in Tabelle 1 zusammengefasst.

**Tabelle 1: In den Beispielen und Vergleichsbeispielen verwendete Materialien.**

| Komponenten | Beschreibung | Hersteller |
|---|---|---|
| PA Typ-A (Komponente A1) | PA616, r. V. = 2,20, Tm = 195°C, C:N = 11, A-EG = 40, C-EG = 33 | EMS-CHEMIE AG (Schweiz) |
| PA Typ-B (Komponente A2) | PA12, r. V. = 2,25, Tm = 178°C, C:N = 12, A-EG = 30, C-EG = 33 | EMS-CHEMIE AG (Schweiz) |
| PA Typ-C (Komponente A2) | PA1016, r. V. = 2,23, Tm = 177°C, C:N = 13, A-EG = 38, C-EG = 35 | EMS-CHEMIE AG (Schweiz) |
| Glasfasern Typ A | CS 7928, 4,5 mm lang, 10 µm Durchmesser (Fasern mit kreisförmigem Querschnitt) | BAYER AG, Deutschland |
| Glasfasern Typ B | CSG3PA-820, 3 mm lang, 28 µm breit, 7 µm dick, Aspektverhältnis der Querschnittsachsen = 4, (flache Glasfasern) | NITTO BOSEKI, Japan |
| Gemahlene Glasfasern | MF 7982 (19/346), Durchmesser 14 µm, Faserlänge 150 ± 20 µm | Lanxess, Deutschalnd |
| Stabilisierung | Mischung aus Kupfer(I)iodid und Kaliumiodid im Verhältnis 1:7 | - |

| | | |
|---|---|---|
| A-EG: Amino-Endgruppen [mmol/kg], C-EG: Carboxyl-Endgruppen [mmol/kg] Tm: Schmelztemperatur, r. V.: relative Viskosität | | |

### 3 Beispiele und Vergleichsbeispiele

### Herstellung der Polyamid-Formmassen

Generell werden zur Herstellung der Polyamid-Formmassen die Komponenten auf üblichen Compoundiermaschinen, wie z.B. ein- oder zweiwelligen Extrudern oder Schneckenknetern, in der Polymerschmelze gemischt (compoundiert). Die Komponenten werden dabei einzeln in den Einzug dosiert oder in Form eines Dryblends zugeführt. Werden Zusatzstoffe (Additive) verwendet, können diese direkt oder in Form eines Masterbatches eingebracht werden. Bei einer Dryblend-Herstellung werden die getrockneten Polymer-Granulate und die Zusatzstoffe vermischt. Zur Vermeidung der Feuchtigkeitsaufnahme kann das Mischen unter getrocknetem Schutzgas erfolgen. Die eingesetzten Glasfasern werden über einen Sidefeeder im beabsichtigten Verhältnis in die Polymerschmelze dosiert und im Zylinder der Compoundiermaschine weiter homogenisiert. Die Dosierungen aller Komponenten in den Einzug bzw. Sidefeeder werden so über elektronisch gesteuerte Waagen eingestellt, dass die gewünschten Mengenverhältnisse Glas - Polymer daraus resultieren.

Die Compoundierung erfolgt bei eingestellten Extruder-Zylindertemperaturen von z.B. 230°C bis 280°C. Vor der Düse kann Vakuum angelegt oder atmosphärisch entgast werden. Die Schmelze wird in Strangform in ein Wasserbad ausgetragen und granuliert. Bevorzugt wird zum Granulieren eine Unterwassergranulierung oder eine Stranggranulierung verwendet.

Die somit bevorzugt in Granulatform erhaltene Kunststoff-Formmasse wird anschließend getrocknet und kann nachher durch Spritzguss zu Formkörpern weiterverarbeitet werden. Dies erfolgt über ein erneutes Aufschmelzen des trockenen Granulats in einem beheizbaren Zylinder, Fördern der Schmelze in eine Spritzgussform, in der die Schmelze erstarren kann.

### Herstellung der Polyamid-Formmasse (I) gemäß Beispiel B1 bis B7 und Vergleichsbeispiel VB1 bis VB4

Die Formmassen für die Beispiele B1 bis B7 sowie für die Vergleichsbeispiele VB1 bis VB4 wurden auf einem Zweiwellenextruder der Firma Werner & Pfleiderer Typ ZSK 25 hergestellt. Die Polyamide (A1) und (A2) sowie der Zusatzstoffe (C) wurden in den in Tabelle 2 angegebenen Mengenanteilen über Dosierwaagen in den Einzug des Extruders dosiert. Die eingesetzten Füllstoffe wurden über einen Sidefeeder (Zone 6) im beabsichtigten Verhältnis in die Polymerschmelze gefördert und im Zylinder der Compoundiermaschine weiter homogenisiert. Die Temperatur des ersten Gehäuses wurde auf 80°C eingestellt, diejenige der restlichen Gehäuse aufsteigend von 240 bis 270°C. Es wurde eine Drehzahl von 200 U/min und ein Durchsatz von 10 kg/h verwendet und in der dritten Zone vor der Düse im Stickstoffstrom entgast. Die als Strang ausgetragene Polyamid-Formmasse (I) wurde im Wasserbad bei 80°C abgekühlt, granuliert und das erhaltene Granulat bei 90°C im Vakuum bei 30 mbar auf einen Wassergehalt von unter 0,1 Gew.-% getrocknet.

### Herstellung der Prüfkörper

Aus dem erhaltenen Granulat wurden Zugstäbe und Schlagstäbe als Probekörper gespritzt, an denen die in Tabelle 2 angegebenen Eigenschaften bestimmt wurden. Die Prüfkörper wurden auf einer Spritzgussmaschine der Firma Arburg, Modell Allrounder 420 C 1000-250 hergestellt. Dabei wurden aufsteigende Zylindertemperaturen von 240°C bis 270°C verwendet. Die Werkzeugtemperatur lag bei den Zug- und Schlagstäben lag die Werkzeugtemperatur bei jeweils 80°C. Die Prüfkörper wurden, sofern nichts anderes angegeben ist, in trockenem Zustand verwendet; dazu wurden sie nach dem Spritzguss mindestens 48 h bei Raumtemperatur in trockener Umgebung, d.h. über Silicagel gelagert.

Die folgende Tabelle 2 betrifft Beispiele gemäß der vorliegenden Erfindung und Vergleichsbeispiele.

**Tabelle 2: Beispiele und Vergleichsbeispiele.**

| **Komponenten** | **Einheit** | **VB1** | **VB2** | **VB3** | **VB4** | **B1** | **B2** | **B3** | **B4** | **B5** | **B6** | **B7** |
|---|---|---|---|---|---|---|---|---|---|---|---|---|
| PA Typ A (A1) | Gew.-% | - | - | - | 13.9 | 55.6 | 55.6 | 44.5 | 44.5 | 55.6 | 55.6 | 44.5 |
| PA Typ B (A2) | Gew.-% | 69.5 | 69.5 | 69.5 | 55.6 | 13.9 | - | 25.0 | | 13.9 | - | - |
| PA Typ C (A2) | Gew.-% | - | - | - | - | - | 13.9 | - | 25.0 | | 13.9 | 25.0 |
| Verhältnis (A1):(A2) | | 0:100 | 0:100 | 0:100 | 20:80 | 80:20 | 80:20 | 64:36 | 64:36 | 80:20 | 80:20 | 64:36 |
| Calciumstearat | Gew.-% | 0.10 | 0.10 | 0.10 | 0.10 | 0.10 | 0.10 | 0.10 | 0.10 | 0.10 | 0.10 | 0.10 |
| Stabilisierung | Gew.-% | 0.40 | 0.40 | 0.40 | 0.40 | 0.40 | 0.40 | 0.40 | 0.40 | 0.40 | 0.40 | 0.40 |
| Gemahlene Glasfasern | Gew.-% | 30.0 | - | - | 30.0 | 30.0 | 30.0 | - | - | - | - | - |
| Glasfasern Typ A | Gew.-% | - | 30.0 | - | - | - | - | 30.0 | 30.0 | - | - | - |
| Glasfasern Typ B | Gew.-% | - | - | 30.0 | - | - | - | - | - | 30.0 | 30.0 | 30.0 |

| **Eigenschaften** | | | | | | | | | | | | |
|---|---|---|---|---|---|---|---|---|---|---|---|---|
| Zug-E-Modul | MPa | 4000 | 6230 | 6650 | 4000 | 4100 | 4000 | 6400 | 6340 | 6700 | 6600 | 6480 |
| Bruchfestigkeit | MPa | 60 | 104 | 107 | 62 | 64 | 63 | 105 | 104 | 108 | 106 | 105 |
| Bruchdehnung | % | 8.0 | 6.3 | 6.8 | 8.4 | 10 | 10 | 6.6 | 6.8 | 7.1 | 7.2 | 7.2 |
| Schlagzähigkeit Charpy, 23°C | kJ/m² | 60 | 78 | 79 | 64 | 80 | 82 | 86 | 90 | 82 | 84 | 87 |
| Kerbschlagzähigkeit Charpy, 23°C | kJ/m² | 6.0 | 8.0 | 11 | 6.5 | 8.0 | 8.2 | 9.1 | 9.5 | 12 | 12 | 12 |
| Abrieb | mg | 1.2 | 1.1 | 1.1 | 1.1 | 0.8 | 0.7 | 0.7 | 0.6 | 0.6 | 0.6 | 0.5 |

### 4. Diskussion der Ergebnisse

Tabelle 2 lässt sich entnehmen, dass die Polyamid-Formmassen entsprechend der erfindungsgemäßen Beispiele B1 bis B7 eine signifikant bessere Abriebfestigkeit aufweisen, d.h. es wird eine geringere Menge an Material abgerieben, als für die Polyamid-Formmassen gemäß der Vergleichsbeispiele VB1 bis VB4.

Weiterhin sind auch die mechanischen Eigenschaften der erfindungsgemäßen Polyamid-Formmassen verbessert. Dies geht aus einem Vergleich der Polyamid-Formmasen hervor, die die gleichen Füllstoffe enthalten. Bruchfestigkeit, Bruchdehnung, Schlagzähigkeit und Kerbschlagzähigkeit der erfindungsgemäßen Polyamid-Formmassen gemäß der Beispiele B1 und B2, die mit gemahlenen Glasfasern gefüllten sind, sind gegenüber den ebenso mit gemahlenen Glasfasern gefüllten Polyamid-Formmassen entsprechend der Vergleichsbeispiele VB1 und VB4 verbessert.

Das Vergleichsbeispiel VB2 ist mit den Beispielen B3 und B4 zu vergleichen und weist neben einer schlechteren Bruchdehnung auch eine schlechtere Schlagzähigkeit und Kerbschlagzähigkeit auf.

Das Vergleichsbeispiel VB3 enthält genau wie die Beispiele B5 bis B7 Glasfasern vom Typ B als Füllstoffe. Auch hier zeigt sich, dass das Vergleichspiel eine geringere Bruchdehnung und eine schlechtere Schlag- als auch Kerbschlagzähigkeit aufweist.

Es wurde also nachgewiesen, dass durch die Kombination von Merkmalen gemäß dem Hauptanspruch eine sehr gute Abriebfestigkeit bei guten mechanischen Eigenschaften erreicht wird.

## Patentansprüche

1. Polyamid-Formmasse (I) enthaltend die Komponenten (A) bis (B) und gegebenenfalls (C) oder bestehend aus diesen Komponenten:
(A) 50 bis 90 Gew.-% einer Mischung bestehend aus den Polyamiden (A1) und (A2); wobei
(A1) 35 bis 95 Gew.-% mindestens eines teilkristallinen, aliphatischen Polyamids mit einem C zu N-Verhältnis von 9 bis 11.5 ist; und
(A2) 5 bis 65 Gew.-% mindestens eines teilkristallinen, aliphatischen Polyamids mit einem C zu N-Verhältnis von wenigstens 12 ausgewählt aus der Gruppe bestehend aus PA1016, PA12, PA717, PA718, PA816, PA817, PA818, PA915, PA916, PA917, PA918, PA1014, PA1015, PA1017, PA1018, PA1113, PA1114, PA1115, PA1116, PA1117, PA1118, PA1212, PA1213, PA1214, PA1215, PA1216, PA1217, PA1218, PA1311, PA1312, PA1313, PA1314, PA1315, PA1316, PA1317, PA1318, PA1410, PA1411, PA1412, PA1413, PA1414, PA1415, PA1416, PA1417, PA1418 und Mischungen davon, ist;
wobei die Summe aus (A1) und (A2) 100 Gew.-% (A) ergibt;
(B) 10 bis 45 Gew.-% mindestens eines partikulären Füllstoffes und/oder faserförmigen Verstärkungsstoffes;
(C) 0 bis 5 Gew.-% mindestens eines Zusatzstoffes;
wobei sich die Gewichtsanteile der Komponenten (A) bis (C) auf 100 Gew.-% ergänzen.

2. Polyamid-Formmasse (I) gemäß Anspruch 1, **dadurch gekennzeichnet, dass**
Komponente (A) aus
50 bis 95 Gew.-%, bevorzugt 60 bis 90 Gew.-% Komponente (A1) und 5 bis 50 Gew.-%, bevorzugt 10 bis 40 Gew.-% Komponente (A2) gebildet wird, wobei die Summe aus (A1) und (A2) 100 Gew.-% (A) ergibt.

3. Polyamid-Formmasse (I) gemäß Anspruch 1 oder 2, **dadurch gekennzeichnet, dass**
Komponente (A1) ein C zu N-Verhältnis von 9 bis 11, bevorzugt von 9,5 bis 11, insbesondere bevorzugt 10 bis 11 und besonders bevorzugt von 11 aufweist; und/oder
Komponente (A2) ein C zu N-Verhältnis von 12 bis 13 und bevorzugt von 12 aufweist.

4. Polyamid-Formmasse (I) gemäß einem der vorhergehenden Ansprüche, **dadurch gekennzeichnet, dass**
Komponente (A1) eine relative Viskosität von 1,7 bis 3,0, bevorzugt von 1.8 bis 2,7 und besonders bevorzugt von 2,0 bis 2,4 aufweist; und/oder
Komponente (A2) eine relative Viskosität von 1,7 bis 3,0, bevorzugt von 1,8 bis 2,7 und besonders bevorzugt von 1,90 bis 2,40 aufweist.

5. Polyamid-Formmasse (I) gemäß einem der vorhergehenden Ansprüche, **dadurch gekennzeichnet, dass**
Komponente (A1) ausgewählt ist aus der Gruppe bestehend aus PA616, PA9, PA10, PA11, PA414, PA415, PA416, PA417, PA418, PA513, PA514, PA515, PA516, PA517, PA518, PA612, PA613, PA614, PA615, PA617, PA711, PA712, PA713, PA714, PA715, PA716, PA810, PA811, PA812, PA813, PA814, PA815, PA99, PA910, PA911, PA912, PA913, PA914, PA108, PA109, PA1010, PA1011, PA1012, PA1013, PA117, PA118, PA119, PA1110, PA1111, PA1112, PA126, PA127, PA128, PA129, PA1210, PA1211, PA136, PA137, PA138, PA139, PA1310, PA146, PA147, PA148, PA149 und Mischungen davon, wobei PA1010, PA1012, PA612, PA614, PA516, PA616 und Mischungen davon bevorzugt sind und PA614 und PA616 besonders bevorzugt sind; und/oder
Komponente (A2) ausgewählt ist aus der Gruppe bestehend aus PA12, PA1014, PA916, PA1016, PA1212 und Mischungen davon, wobei PA12 und PA1016 bevorzugt sind.

6. Polyamid-Formmasse (I) gemäß einem der vorhergehenden Ansprüche, **dadurch gekennzeichnet, dass**
die Verstärkungsstoffe der Komponente (B) ausgewählt sind aus der Gruppe bestehend aus Glasfasern, Kohlenstofffasern, Borfasern, Aramidfasern, Basaltfasern oder Mischungen solcher Fasern; und/oder
die Füllstoffe der Komponente (B) ausgewählt sind aus der Gruppe bestehend aus Talk, Glimmer, Silikat, Quarz, Titandioxid, Wollastonit, Kaolin, amorphen Kieselsäuren, Magnesiumcarbonat, Magnesiumhydroxid, Kreide, Kalk, Feldspat, Bariumsulfat, Voll- oder Hohl-Glaskugeln, gemahlenem Glas oder Mischungen hiervon.

7. Polyamid-Formmasse (I) gemäß einem der vorhergehenden Ansprüche, **dadurch gekennzeichnet, dass** Komponente (B) faserförmig oder teilchenförmig ist und bevorzugt ausgewählt ist aus der Gruppe bestehend aus Glasfasern oder Glaskugeln und Mischungen daraus, wobei Glasfasern besonders bevorzugt sind und insbesondere die Glassorte des Füllstoffes (B) ausgewählt ist aus E-Glas, ECR-Glas, S-Glas, A-Glas, AR-Glas, R-Glas und Mischungen davon.

8. Polyamid-Formmasse (I) gemäß einem der vorhergehenden Ansprüche, **dadurch gekennzeichnet, dass** Komponente (C) ausgewählt ist aus der Gruppe bestehend aus Schmiermitteln, Wärmestabilisatoren, Verarbeitungsstabilisatoren, Oxidationsverzögerern, Mitteln gegen Wärmezersetzung und Zersetzung durch ultraviolettes Licht, Gleit- und Entformungsmitteln, Färbemitteln, insbesondere Farbstoffen und Pigmenten, Keimbildungsmitteln, Weichmachern, anorganischen Pigmenten, organischen Pigmenten und Mischungen davon, wobei Schmiermittel bevorzugt von 0 bis 2 Gew.-%, besonders bevorzugt von 0,05 bis 2,0 Gew.-%, insbesondere bevorzugt von 0,1 bis 1,5 Gew.% und am bevorzugtesten von 0,1 bis 1,0 Gew.-% und Wärmestabilisatoren bevorzugt von 0 bis 3 Gew.-%, besonders bevorzugt von 0,02 bis 2,0 Gew.-% und insbesondere bevorzugt von 0,1 bis 1,5 Gew.%, jeweils bezogen auf das Gesamtgewicht der Komponenten (A) bis (C), enthalten sind.

9. Polyamid-Formmasse (I) gemäß einem der vorhergehenden Ansprüche, **dadurch gekennzeichnet, dass**
der Anteil von Komponente (A) in der Polyamid-Formmasse (I) im Bereich von 57 bis 85 oder 57 bis 84.9 Gew.-% und bevorzugt von 63 bis 79.8 Gew.-%, bezogen auf das Gesamtgewicht der Komponenten (A) bis (C), liegt, und/oder
der Anteil von Komponente (B) in der Polyamid-Formmasse (I) im Bereich von 15 bis 40 Gew.-%, bevorzugt von 20 bis 35 Gew.-% und besonders bevorzugt von 25 bis 35 Gew.-%, bezogen auf das Gesamtgewicht der Komponenten (A) bis (C), liegt, und/oder der Anteil von Komponente (C) in der Polyamid-Formmasse (I) im Bereich von 0 bis 3 Gew.-% und bevorzugt von 0,1 bis 3,0 Gew.-% und besonders bevorzugt von 0,2 bis 2,0 Gew.-%, bezogen auf das Gesamtgewicht der Komponenten (A) bis (C), liegt.

10. Polyamid-Formmasse (I) gemäß einem der vorhergehenden Ansprüche, **dadurch gekennzeichnet, dass**
diese die folgenden Komponenten (A) bis (C) enthält oder bevorzugt aus diesen Komponenten besteht:
(A) 58 bis 84.9 Gew.-% einer Mischung bestehend aus den Polyamiden (A1) und (A2); wobei
(A1) 50 bis 90 Gew.-% eines Polyamids ausgewählt aus der Gruppe bestehend aus PA516, PA614, PA616, PA616/614, PA616/612 oder PA516/616 und Mischungen davon ist; und
(A2) 10 bis 50 Gew.-% eines Polyamids ausgewählt aus der Gruppe bestehend aus PA12, PA916, PA1016 oder Mischungen daraus ist;
wobei die Summe aus (A1) und (A2) 100 Gew.-% (A) ergibt;
(B) 15 bis 40 Gew.-% Glasfasern;
(C) 0.1 bis 2.0 Gew.-% mindestens eines Zusatzstoffes;
wobei sich die Gewichtsanteile der Komponenten (A) bis (C) auf 100 Gew.-% ergänzen.

11. Polyamid-Formmasse (I) gemäß einem der vorhergehenden Ansprüche, **dadurch gekennzeichnet, dass**
diese die folgenden Komponenten (A) bis (B) und gegebenenfalls (C) enthält oder bevorzugt aus diesen Komponenten besteht:
(A) 62 bis 75 Gew.-% einer Mischung bestehend aus den Polyamiden (A1) und (A2); wobei
(A1) 60 bis 81 Gew.-% eines Polyamids ausgewählt aus der Gruppe bestehend aus PA516, PA614, PA616 oder PA516/616 und Mischungen davon ist; und
(A2) 19 bis 39 Gew.-% eines Polyamids ausgewählt aus der Gruppe bestehend aus PA12, PA916, PA1016 oder Mischungen daraus ist;
wobei die Summe aus (A1) und (A2) 100 Gew.-% (A) ergibt;
(B) 25 bis 35 Gew.-% Glasfasern;
(C) 0 bis 3 Gew.-% mindestens eines Zusatzstoffes;
wobei sich die Gewichtsanteile der Komponenten (A) bis (C) auf 100 Gew.-% ergänzen.

12. Polyamid-Formmasse (I) gemäß einem der vorhergehenden Ansprüche, **dadurch gekennzeichnet, dass** diese
eine Bruchfestigkeit bestimmt nach ISO 527 von mindestens 60 MPa, bevorzugt mindestens 75 MPa und besonders bevorzugt mindestens 80 MPa aufweist; und/oder
eine Bruchdehnung bestimmt nach ISO 527 von mindestens 5 %, bevorzugt mindestens 6 % und besonders bevorzugt mindestens 8 % aufweist.

13. Polyamid-Formmasse nach einem der vorhergehenden Ansprüche, **dadurch gekennzeichnet, dass** der angussferne Teil eines ISO-Zugstabs (Typ A1, Masse 170 x 20/10 x4), der mit einer Geschwindigkeit von 3 m/min bei 23°C über eine Stahlplatte bewegt wird (Auflagefläche 20 x 4 mm²) nach 8 Stunden einen Abrieb von maximal 1 mg, bevorzugt von maximal 0,9 mg und besonders bevorzugt von maximal 0,8 mg, aufweist.

14. Gegenstand der ein- oder mehrschichtig ist und mindestens eine Schicht aufweist, welche die Polyamid-Formmasse (I) gemäß einem der Ansprüche 1 bis 13 enthält und bevorzugt aus dieser besteht.

15. Gegenstand gemäß Anspruch 14, **dadurch gekennzeichnet, dass** dieser eine Schicht enthaltend die Polyamid-Formmasse (I) gemäß einem der Ansprüche 1 bis 10 oder bestehend aus dieser und mindestens eine weitere Schicht aufweist und die mindestens eine weitere Schicht, eine von der Polyamid-Formmasse (I) verschiedene Polyamid-Formmasse (II) enthält und bevorzugt aus dieser besteht, wobei diese insbesondere bevorzugt die folgenden Komponenten (D) bis (E) und gegebenenfalls (F) enthält und ganz besonders bevorzugt aus diesen gebildet wird:
(D) 50 bis 90 Gew.-% mindestens eines aliphatischen oder teilaromatischen Polyamids gebildet aus aliphatischen Diaminen mit 4 bis 12, bevorzugt 6 bis10 Kohlenstoffatomen, aliphatischen Dicarbonsäuren mit 6 bis 12, bevorzugt 6 bis 10 Kohlenstoffatomen und aromatischen Dicarbonsäuren, insbesondere Terephthalsäure und Isophthalsäure;
(E) 10 bis 60 Gew.-% mindestens eines Füllstoffes;
(F) 0 bis 5 Gew.-% mindestens eines Zusatzstoffes;
wobei sich die Gewichtsanteile der Komponenten (D) bis (F) auf 100 Gew.-% ergänzen.

16. Gegenstand gemäß Anspruch 15, **dadurch gekennzeichnet, dass** Komponente (D) der Polyamid-Formmasse (II) ausgewählt ist aus der Gruppe bestehend aus PA6, PA66, PA6/66, PA46, PA56, PA510, PA610, PA612, PA6T/6I, PA6T/66, PA6T/10T, PA9T, PA9T/MT (M = Methyloctan-1,8-diamin), PA10T, PA11/10T, PA12/10T, PA10T/66, PA10T/106, PA10T/610, PA10T/612 und Mischungen davon, insbesondere aus der Gruppe bestehend aus PA6, PA66, PA6/66, PA6T/6I, PA6T/66, PA6T/10T, PA10T/612 und Mischungen davon und besonders bevorzugt PA66 oder eine Mischung aus PA66 und PA6T/6I ist, wobei PA66 mindestens 50 Gew.-% ausmacht.

17. Gegenstand gemäß einem der Ansprüche 14 bis 16, **dadurch gekennzeichnet dass**, der Gegenstand ein Zahnrad ist, welches bevorzugt in einem Schneckenradgetriebe eines elektrischen Aktuators in einer Servolenkung eines Kraftfahrzeugs, in einem Komfortantrieb in einem Kraftfahrzeug, besonders bevorzugt einem Schiebedachantrieb, einem Sitzverstellungsantrieb oder einem Fensterheberantrieb, verwendet wird.

18. Gegenstand gemäß Anspruch 17, **dadurch gekennzeichnet, dass** der Kern-, Schalen- oder Verzahnungsbereich des Zahnrades teilweise oder als Ganzes durch die Polyamid-Formmasse (I) gemäß einem der Ansprüche 1 bis 7 gebildet wird, wobei besonders bevorzugt der Verzahnungsbereich des Zahnrades teilweise oder als Ganzes durch die Polyamid-Formmasse (I) gemäß einem der Ansprüche 1 bis 7 gebildet wird.

19. Verwendung der Polyamid-Formmasse (I) gemäß einem der Ansprüche 1 bis 13 als abriebfeste Beschichtung von Zahnrädern, Lagerschalen, Führungsbuchsen, Lagergehäusen für Getriebe, Tür- oder Fenstergriffen.

## Claims

1. A polyamide molding compound (I) comprising the components (A) to (B) and optionally (C) or consisting of these components:
(A) 50 to 90 wt% of a mixture consisting of the polyamides (A1) and (A2); wherein
(A1) is 35 to 95 wt% of at least one semicrystalline aliphatic polyamide having a C to N ratio of 9 to 11.5; and
(A2) is 5 to 65 wt% of at least one semicrystalline aliphatic polyamide having a C to N ratio of at least 12 selected from the group consisting of PA1016, PA12, PA717, PA718, PA816, PA817, PA818, PA915, PA916, PA917, PA918, PA1014, PA1015, PA1017, PA1018, PA1113, PA1114, PA1115, PA1116, PA1117, PA1118, PA1212, PA1213, PA1214, PA1215, PA1216, PA1217, PA1218, PA1311, PA1312, PA1313, PA1314, PA1315, PA1316, PA1317, PA1318, PA1410, PA1411, PA1412, PA1413, PA1414, PA1415, PA1416, PA1417, PA1418, and mixtures thereof;
where the sum of (A1) and (A2) adds up to 100 wt% (A);
(B) 10 to 45 wt% of at least one particulate filler and/or fibrous reinforcement;
(C) 0 to 5 wt% of at least one additive;
wherein the weight proportions of the components (A) to (C) add up to 100 wt%.

2. A polyamide molding compound (I) in accordance with claim 1, **characterized in that**
component (A) is formed from
50 to 95 wt%, preferably 60 to 90 wt% of component (A1) and 5 to 50 wt%, preferably 10 to 40 wt%, of component (A2), where the sum of (A1) and (A2) adds up to 100 wt% (A).

3. A polyamide molding compound (I) in accordance with claim 1 or claim 2, **characterized in that**
component (A1) has a C to N ratio of 9 to 11, preferably of 9.5 to 11, in particular preferably 10 to 11, and particularly preferably of 11; and/or
component (A2) has a C to N ratio of 12 to 13 and preferably of 12.

4. A polyamide molding compound (I) in accordance with one of the preceding claims, **characterized in that**
component (A1) has a relative viscosity of 1.7 to 3.0, preferably of 1.8 to 2.7, and particularly preferably of 2.0 to 2.4; and/or
component (A2) has a relative viscosity of 1.7 to 3.0, preferably of 1.8 to 2.7, particularly preferably of 1.90 to 2.40.

5. A polyamide molding compound (I) in accordance with one of the preceding claims, **characterized in that**
component (A1) is selected from the group comprising PA616, PA9, PA10, PA11, PA414, PA415, PA416, PA417, PA418, PA513, PA514, PA515, PA516, PA517, PA518, PA612, PA613, PA614, PA615, PA617, PA711, PA712, PA713, PA714, PA715, PA716, PA810, PA811, PA812, PA813, PA814, PA815, PA99, PA910, PA911, PA912, PA913, PA914, PA108, PA109, PA1010, PA1011, PA1012, PA1013, PA117, PA118, PA119, PA1110, PA1111, PA1112, PA126, PA127, PA128, PA129, PA1210, PA1211, PA136, PA137, PA138, PA139, PA1310, PA146, PA147, PA148, PA149, and mixtures thereof, where PA1010, PA1012, PA612, PA614, PA516, and PA616, and mixtures thereof are preferred and PA614 and PA616 are particularly preferred; and/or
component (A2) is selected from the group comprising PA12, PA1014, PA916, PA1016, PA1212, and mixtures thereof, where PA12 and PA1016 are preferred.

6. A polyamide molding compound (I) in accordance with one of the preceding claims, **characterized in that**
the reinforcements of component (B) are selected from the group comprising glass fibers, carbon fibers, boron fibers, aramid fibers, basalt fibers, or mixtures of such fibers; and/or
the fillers of component (B) are selected from the group comprising talcum, mica, silicate, quartz, titanium dioxide, wollastonite, kaolin, amorphous silicone dioxides, magnesium carbonate, magnesium hydroxide, chalk, calcium, feldspar, barium sulfate, solid or hollow glass spheres, ground glass, or mixtures thereof.

7. A polyamide molding compound (I) in accordance with one of the preceding claims, **characterized in that** component (B) is fibrous or particulate and is preferably selected from the group comprising glass fibers or glass spheres, and mixtures thereof, where glass fibers are particularly preferred, and in particular the glass type of the filler (B) is selected from E-glass, ECR-glass, S-glass, A-glass, AR-glass, R-glass, and mixtures thereof.

8. A polyamide molding compound (I) in accordance with one of the preceding claims, **characterized in that** component (C) is selected from the group comprising lubricants, heat stabilizers, processing stabilizers, oxidation inhibitors, means against heat degradation and degradation by ultraviolet light, mold lubricating means and demolding means, colorants, in particular dyestuffs and pigments, nucleation means, plasticizers, inorganic pigments, organic pigments, and mixtures thereof, where lubricants of preferably 0 to 2 wt%, particularly preferably of 0.05 to 2.0 wt%, in particular preferably of 0.1 to 1.5 wt%, and most preferably of 0.1 to 1.0 wt%, and heat stabilizers of preferably 0 to 3 wt%, particularly preferably of 0.02 to 2.0 wt%, and in particular preferably of 0.1 to 1.5 wt%, are contained, in each case with respect to the total weight of components (A) to (C).

9. A polyamide molding compound (I) in accordance with one of the preceding claims, **characterized in that**
the portion of component (A) in the polyamide molding compound (I) is in the range of 57 to 85 or 57 to 84.9 wt.% and preferably of 63 to 79.8 wt%, with respect to the total weight of components (A) to (C); and/or
the portion of component (B) in the polyamide molding compound (I) is in the range of 15 to 40 wt%, preferably of 20 to 35 wt%, and particularly preferably of 25 to 35 wt%, with respect to the total weight of components (A) to (C); and/or
the portion of component (C) in the polyamide molding compound (I) is in the range of 0 to 3 wt% and preferably of 0.1 to 3.0 wt%, and particularly preferably of 0.2 to 2.0 wt%, with respect to the total weight of components (A) to (C).

10. A polyamide molding compound (I) in accordance with one of the preceding claims, **characterized in that**
it comprises the following components (A) to (C) or preferably consists of these components:
(A) 58 to 84.9 wt% of a mixture consisting of the polyamides (A1) and (A2); where
(A1) is 50 to 90 wt% of a polyamide selected from the group consisting of PA516, PA614, PA616, PA616/614, PA616/612, or PA516/616, and mixtures thereof; and
(A2) is 10 to 50 wt% of a polyamide selected from the group consisting of PA12, PA916, PA1016, or mixtures thereof,
where the sum of (A1) and (A2) adds up to 100 wt% (A);
(B) 15 to 40 wt.% glass fibers;
(C) 0.1 to 2.0 wt% of at least one additive;
wherein the weight proportions of the components (A) to (C) add up to 100 wt%.

11. A polyamide molding compound (I) in accordance with one of the preceding claims, **characterized in that**
it comprises the following components (A) to (B) and optionally (C) or preferably consists of these components:
(A) 62 to 75 wt% of a mixture consisting of the polyamides (A1) and (A2); where
(A1) is 60 to 81 wt% of a polyamide selected from the group consisting of PA516, PA614, PA616 or PA516/616, and mixtures thereof; and
(A2) is 19 to 39 wt% of a polyamide selected from the group consisting of PA12, PA916, PA1016, or mixtures thereof,
where the sum of (A1) and (A2) adds up to 100 wt% (A);
(B) 25 to 35 wt.% glass fibers;
(C) 0 to 3 wt% of at least one additive;
wherein the weight proportions of the components (A) to (C) add up to 100 wt%.

12. A polyamide molding compound (I) in accordance with one of the preceding claims, **characterized in that** it
has a tensile strength determined in accordance with ISO 527 of at least 60 MPa, preferably at least 75 MPa, and particularly preferably at least 80 Mpa; and/or
an elongation at break determined in accordance with ISO 527 of at least 5%, preferably of at least 6%, and particularly preferably of at least 8%.

13. A polyamide molding material in accordance with one of the preceding claims, **characterized in that** the portion of an ISO tensile bar (Type A1, mass 170 x 20/10 x 4) remote from the sprue that is moved over a steel plat (contact surface 20 x 4 mm²) at a speed of 3 m/min at 23°C has an abrasion after 8 hours of a maximum of 1 mg, preferably of a maximum of 0.9 mg, and particularly preferably of a maximum of 0.8 mg.

14. An object that is a monolayer or multilayer and has at least one layer that comprises the polyamide molding compound (I) in accordance with one of the claims 1 to 13 and preferably consists thereof.

15. An object in accordance with claim 14, **characterized in that** it has a layer comprising the polyamide molding compound (I) in accordance with one of the claims 1 to 10 or consisting thereof and has at least one further layer and the at least one further layer comprises a polyamide molding compound (II) different from the polyamide molding compound (I) and preferably consists thereof, with it in particular preferably comprising the following components (D) to (E), and optionally (F), and very particularly preferably being formed therefrom:
(D) 50 to 90 wt% of at least one aliphatic or partially aromatic polyamide formed from aliphatic diamines having 4 to 12, preferably 6 to 10, carbon atoms, aliphatic dicarboxylic acids having 6 to 12, preferably 6 to 10, carbon atoms, and aromatic dicarboxylic acids, in particular terephthalic acid and isophthalic acid;
(E) 10 to 60 wt% of at least one filler;
(F) 0 to 5 wt% of at least one additive;
where the weight portions of the components (D) to (F) add up to 100 wt%.

16. An object in accordance with claim 15, **characterized in that** component (D) of the polyamide molding compound (II) is selected from the group consisting of PA6, PA66, PA6/66, PA46, PA56, PA510, PA610, PA612, PA6T/6I, PA6T/66, PA6T/10T, PA9T, PA9T/MT (M = methyloctane-1,8-diamine), PA10T, PA11/10T, PA12/10T, PA10T/66, PA10T/106, PA10T/610, PA10T/612, and mixtures thereof, in particular from the group consisting of PA6, PA66, PA6/66, PA6T/6I, PA6T/66, PA6T/10T, PA10T/612, and mixtures thereof, and is particularly preferably PA66, or a mixture of PA66 and PA6T/6T, where PA66 makes up at least 50 wt%.

17. An object in accordance with one of the claims 14 to 16, **characterized in that** the object is a gear that is preferably used in a worm gear transmission of an electric actuator in a power steering of a motor vehicle, in a comfort drive in a motor vehicle, particularly preferably in a sunroof drive, a seat adjustment drive, or a window winder drive.

18. An object in accordance with claim 17, **characterized in that** the core, shell, or toothed portion of the gear is formed in part or as a whole by the polyamide molding compound (I) in accordance with one of the claims 1 to 7, wherein the toothed portion of the gear is particularly preferably formed in part or as a whole by the polyamide molding compound (I) in accordance with one of the claims 1 to 7.

19. Use of the polyamide molding compound (I) in accordance with one of the claims 1 to 13 as a wear resistant coating of gears, bearing shells, guide bushes, bearing housings for transmissions, door or window handles.

## Revendications

1. Matière à mouler (I) en polyamide contenant les composants (A) à (B) et éventuellement (C) ou constituée de ces composants :
(A) 50 à 90 % en poids d'un mélange constitué des polyamides (A1) et (A2) ; où
(A1) est à raison de 35 à 95 % en poids au moins un polyamide aliphatique, semi cristallin avec un rapport C sur N de 9 à 11,5 ; et
(A2) est à raison de 5 à 65 % en poids au moins un polyamide aliphatique semi cristallin avec un rapport C sur N-d'au moins 12 choisi dans le groupe constitué des PA1016, PA12, PA717, PA718, PA816, PA817, PA818, PA915, PA916, PA917, PA918, PA1014, PA1015, PA1017, PA1018, PA1113, PA1114, PA1115, PA1116, PA1117, PA1118, PA1212, PA1213, PA1214, PA1215, PA1216, PA1217, PA1218, PA1311, PA1312, PA1313, PA1314, PA1315, PA1316, PA1317, PA1318, PA1410, PA1411, PA1412, PA1413, PA1414, PA1415, PA1416, PA1417, PA1418 et de leurs mélanges ;
où la somme de (A1) et (A2) est de 100 % en poids de (A) ;
(B) 10 à 45 % en poids au moins d'une charge particulaire et/ou d'un produit de renforcement sous forme de fibres ;
(C) 0 à 5 % en poids au moins d'un produit auxiliaire ;
où les proportions en poids des composants (A) à (C) se complètent à 100 % en poids.

2. Matière à mouler en polyamide (I) selon la revendication 1, **caractérisée en ce que**
le composant (A) est formé de
50 à 95 % en poids, de préférence, de 60 à 90 % en poids de composant (A1), et de 5 à 50 % en poids, de préférence, de 10 à 40 % en poids de composant (A2), où la somme de (A1) et (A2) donne 100 % en poids de (A).

3. Matière à mouler en polyamide (I) selon la revendication 1 ou la revendication 2, **caractérisée en ce que**
le composant (A1) présente un rapport C sur N de 9 à 11, de préférence de 9,5 à 11, plus préférentiellement de 10 à 11 et idéalement de 11 ; et/ou
le composant (A2) présente un rapport C sur N de 12 à 13 et de préférence de 12.

4. Matière à mouler en polyamide (I) selon l'une des revendications précédentes, **caractérisée en ce que**
le composant (A1) présente une viscosité relative de 1,7 à 3,0, de préférence de 1,8 à 2,7 et idéalement de 2,0 à 2,4 ; et/ou
le composant (A2) présente une viscosité relative de 1,7 à 3,0, de préférence de 1,8 à 2,7 et idéalement de 1,90 à 2,40.

5. Matière à mouler en polyamide (I) selon l'une des revendications précédentes, **caractérisée en ce que**
le composant (A1) est choisi dans le groupe constitué des PA616, PA9, PA10, PA11, PA414, PA415, PA416, PA417, PA418, PA513, PA514, PA515, PA516, PA517, PA518, PA612, PA613, PA614, PA615, PA617, PA711, PA712, PA713, PA714, PA715, PA716, PA810, PA811, PA812, PA813, PA814, PA815, PA99, PA910, PA911, PA912, PA913, PA914, PA108, PA109, PA1010, PA1011, PA1012, PA1013, PA117, PA118, PA119, PA1110, PA1111, PA1112, PA126, PA127, PA128, PA129, PA1210, PA1211, PA136, PA137, PA138, PA139, PA1310, PA146, PA147, PA148, PA149 et de leurs mélanges, où PA1010, PA1012, PA612, PA614, PA516, PA616 et leurs mélanges sont privilégiés et PA614 et PA616 sont particulièrement préférés ; et/ou
le composant (A2) est choisi dans le groupe constitué des PA12, PA1014, PA916, PA1016, PA1212 et de leurs mélanges, où PA12 et PA1016 sont préférés.

6. Matière à mouler en polyamide (I) selon l'une des revendications précédentes, **caractérisée en ce que**
les produits de renforcement du composant (B) sont choisis dans le groupe constitué des fibres de verre, des fibres de carbone, des fibres de bore, des fibres d'aramide, des fibres de basalte ou de mélanges de telles fibres ; et/ou
les charges du composant (B) sont choisies dans le groupe constitué du talc, du mica, d'un silicate, du quartz, du dioxyde de titane, de la wollastonite, du kaolin, d'acides siliciques amorphes, de carbonate de magnésium, d'hydroxyde de magnésium, de craie, de calcaire, de feldspath, de sulfate de baryum, de billes de verre creuses ou pleines, de verre broyé ou de mélanges de ceux-ci.

7. Matière à mouler en polyamide (I) selon l'une des revendications précédentes, **caractérisée en ce que** le composant (B) est sous forme de fibres ou de particules et est de préférence choisi dans le groupe constitué des fibres de verre ou des billes de verre et de mélanges de celles-ci, où les fibres de verre sont particulièrement préférées et le type de verre de la charge (B) est en particulier choisi parmi le verre E, le verre ECR, le verre S, le verre A, le verre AR, le verre R et leurs mélanges.

8. Matière à mouler en polyamide (I) selon l'une des revendications précédentes, **caractérisée en ce que** le composant (C) est choisi dans le groupe constitué des lubrifiants, des stabilisants thermiques, des stabilisants de façonnage, de retardants d'oxydation, de produits contre la dégradation thermique et la dégradation par la lumière ultraviolette, de produits de coulée et de démoulage, de produits colorants, notamment de colorants et de pigments, de produits anti-germes, de plastifiants, de pigments inorganiques, de pigments organiques et de leurs mélanges, où les lubrifiants sont contenus de préférence à raison de 0 à 2 % en poids, plus préférentiellement à raison de 0,05 à 2,0 % en poids, de manière particulièrement préférée à raison de 0,1 à 1,5 % en poids, et idéalement à raison de 0,1 à 1,0 % en poids, et les stabilisants thermiques sont contenus de préférence à raison de 0 à 3 % en poids, plus préférentiellement à raison de 0,02 à 2,0 % en poids et de manière particulièrement préférée à raison de 0,1 à 1,5 % en poids, respectivement par rapport au poids total des composants (A) à (C).

9. Matière à mouler en polyamide (I) selon l'une des revendications précédentes, **caractérisée en ce que**
la proportion du composant (A) dans la matière à mouler en polyamide (I) se situe dans la plage de 57 à 85 ou de 57 à 84,9 % en poids, et de préférence de 63 à 79,8 % en poids par rapport au poids total des composants (A) à (C), et/ou
la proportion du composant (B) dans la matière à mouler en polyamide (I) se situe dans la plage de 15 à 40 % en poids, de préférence de 20 à 35 % en poids et de manière particulièrement préférée de 25 à 35 % en poids, par rapport au poids total des composants (A) à (C), et/ou
la proportion du composant (C) dans la matière à mouler en polyamide (I) se situe dans la plage de 0 à 3 % en poids, de préférence de 0,1 à 3,0 % en poids et de manière particulièrement préférée de 0,2 à 2,0 % en poids, par rapport au poids total des composants (A) à (C).

10. Matière à mouler en polyamide (I) selon l'une des revendications précédentes, **caractérisée en ce que**
celle-ci contient les composants (A) à (C) suivants ou est de préférence constituée de ces composants :
(A) de 58 à 84,9 % en poids d'un mélange constitué des polyamides (A1) et (A2) ; où
(A1) est à raison de 50 à 90 %en poids d'un polyamide choisi dans le groupe constitué des PA516, PA614, PA616, PA616/614, PA616/612 ou PA516/616 et de mélanges de ceux-ci ; et
(B2) à raison de 10 à 50 % en poids d'un polyamide choisi dans le groupe constitué des PA12, PA916, PA1016 ou de leurs mélanges ;
où la somme de (A1) et (A2) est de 100 % en poids de (A) ;
(B) de 15 à 40 % en poids de fibres de verre ;
(C) de 0,1 à 2,0 % en poids au moins d'un produit auxiliaire ;
où les proportions en poids des composants (A) à (C) se complètent à 100 % en poids.

11. Matière à mouler en polyamide (I) selon l'une des revendications précédentes, **caractérisée en ce que**
celle-ci contient les composants (A) à (B) suivants et éventuellement le composant (C), ou est de préférence constituée de ces composants :
(A) de 62 à 75 % en poids d'un mélange constitué des polyamides (A1) et (A2) ; où
(A1) à raison de 60 à 81 % en poids un polyamide choisi dans le groupe constitué des PA516, PA614, PA616 ou PA516/616 et de leurs mélanges ; et
(A2) à raison de 19 à 39 % en poids d'un polyamide choisi dans le groupe constitué des PA12, PA916, PA1016 ou de leurs mélanges ;
où la somme de (A1) et (A2) est de 100 % en poids de (A) ;
(B) de 25 à 35 % de fibres de verre ;
(C) de 0 à 3 % en poids au moins d'un produit auxiliaire ;
où les proportions en poids des composants (A) à (C) se complètent à 100 % en poids.

12. Matière à mouler en polyamide (I) selon l'une des revendications précédentes, **caractérisée en ce que** celle-ci
présente une résistance à la rupture selon la norme ISO 527 d'au moins 60 MPa, de préférence d'au moins 75 MPa et de manière particulièrement préférée d'au moins 80 MPa ; et/ou
une élongation à la rupture selon la norme ISO 527 d'au moins 5 %, de préférence d'au moins 6 % et de manière particulièrement préférée d'au moins 8 %.

13. Matière à mouler en polyamide selon l'une des revendications précédentes, **caractérisée en ce que** la partie éloignée de la carotte d'une tige de traction ISO (Type A1, Masse 170 x 20/10 x4), qui est déplacée avec une vitesse de 3 m/min à 23 °C sur une plaque en acier (surface d'appui 20 x 4 mm²) après 8 heures, présente une abrasion d'au maximum 1 mg, de préférence d'au maximum 0,9 mg et de manière particulièrement préférée d'au maximum 0,8 mg.

14. Objet qui est monocouche ou multicouche et présente au moins une couche, laquelle contient la matière à mouler en polyamide (I) selon l'une des revendications 1 à 13 et en est de préférence constitué.

15. Objet selon la revendication 14, **caractérisé en ce que** celui-ci présente une couche contenant la matière à mouler en polyamide (I) selon l'une des revendications 1 à 10 ou en étant constitué, et au moins une autre couche, et l'au moins une autre couche contient une matière à mouler en polyamide (II) différente de la matière à mouler en polyamide (I), et de préférence en est constituée, où celle-ci en particulier contient de préférence les composants (D) à (E) suivants et éventuellement (F), et de manière particulièrement préférée, en est constituée :
(D) 50 à 90 % en poids au moins d'un polyamide aliphatique ou semi aromatique formé à partir de diamines aliphatiques avec de 4 à 12, de préférence de 6 à 10 atomes de carbone, d'acides dicarboxyliques aliphatiques avec de 6 à 12, de préférence de 6 à 10 atomes de carbone et d'acides dicarboxyliques aromatiques, en particulier d'acide téréphtalique et d'acide isophthalique ;
(E) 10 à 60 % en poids au moins de charge ;
(F) 0 à 5 % en poids au moins d'un produit auxiliaire ;
où les proportions en poids des composants (D) à (F) se complètent à 100 % en poids.

16. Objet selon la revendication 15, **caractérisée en ce que** le composant (D) de la matière à mouler en polyamide (II) est choisi dans le groupe constitué des PA6, PA66, PA6/66, PA46, PA56, PA510, PA610, PA612, PA6T/6I, PA6T/66, PA6T/10T, PA9T, PA9T/MT (M = méthyloctan-1,8-diamine), PA10T, PA11/10T, PA12/10T, PA10T/66, PA10T/106, PA10T/610, PA10T/612 et de mélanges de ceux-ci, notamment dans le groupe constitué des PA6, PA66, PA6/66, PA6T/6I, PA6T/66, PA6T/10T, PA10T/612 et de mélanges de ceux-ci et est de manière particulièrement préférée de PA66 ou d'un mélange de PA66 et de PA6T/61, où le PA66 correspond à au moins 50 % du poids.

17. Objet selon l'une des revendications 14 à 16, **caractérisée en ce que** l'objet est de préférence une roue dentée, laquelle est utilisée dans un engrenage à vis sans fin d'un actionneur électrique dans une direction assistée d'un véhicule, dans un entraînement de confort dans un véhicule, de manière particulièrement préférée, un entrainement de toit ouvrant, un entrainement pour le changement de position de siège ou un entraînement de lève-vitres.

18. Objet selon la revendication 17, **caractérisée en ce que** la zone centrale, la zone périphérique ou la zone de denture de la roue dentée est formée partiellement ou dans sa totalité par la matière à mouler en polyamide (I) selon l'une des revendications 1 à 7, où, de manière particulièrement préférée, la zone de denture de la roue dentée est formée partiellement ou dans sa totalité par la matière à mouler en polyamide (I) selon l'une de revendications 1 à 7.

19. Utilisation de la matière à mouler en polyamide (I) selon l'une des revendications 1 à 13 en tant que revêtement résistant à l'abrasion de roues dentées, de coquilles de coussinets, de manchons de guidage, de logements de paliers pour entraînements, de poignées de portes ou de vitres.
